# EUROPEAN PATENT APPLICATION

(11) **EP 4 790 782 A1**
(43) Date of publication of application: **12.08.2026**
(21) Application number: 26157604.5
(22) Date of filing: 10.02.2026
(51) Int. Cl.: H01M 10/0525, H01M 50/414, H01M 50/42, H01M 50/443, H01M 50/449, H01M 50/457, H01M 50/46, H01M 50/403

(54) **SEPARATOR FOR RECHARGEABLE BATTERY AND RECHARGEABLE BATTERY INCLUDING THE SAME**

(30) Priority: 11.02.2025 KR 20250017138; 11.02.2025 KR 20250017139; 11.02.2025 KR 20250017144
(71) Applicant: SAMSUNG SDI CO., LTD., Yongin-si, Gyeonggi-do 17084 (KR)
(72) Inventor: KIM, Bo Ram, 16678 Suwon-si (KR); KIM, Ji Yoon, 16678 Suwon-si (KR); PARK, Sam Jin, 16678 Suwon-si (KR); PARK, Ha Yun, 16678 Suwon-si (KR); LEE, Woo Sung, 16678 Suwon-si (KR); HA, Ye Ji, 16678 Suwon-si (KR)
(74) Representative: Maiwald GmbH

(57) **Abstract**

The present disclosure relates to a separator for a rechargeable battery, and a rechargeable battery including the separator. The separator for a rechargeable battery includes a porous substrate, and a coating layer formed on at least one surface of the porous substrate. The coating layer includes a core-shell binder having a core and a shell surrounding the core, and the shell has an adhesive functional group at a terminal thereof and has an alkylene glycol group-containing structural unit and a cyano group-containing structural unit.

## Description

### BACKGROUND

### 1. Field of the Disclosure

The present disclosure relates to a separator for a rechargeable battery, and a rechargeable battery including the separator.

### 2. Discussion of Related Art

With increasing presence of electronic devices such as, e.g., mobile phones, notebook computers, electric vehicles, and the like, that use batteries, the demand for secondary batteries having high energy density and high capacity is increasing. Therefore, improving the performance of rechargeable lithium batteries may be advantageous.

A rechargeable lithium battery includes a positive electrode and a negative electrode that contain an active material capable of the intercalation and deintercalation of lithium ions, and produces electric energy by oxidation and reduction reactions when the lithium ions are intercalated into and deintercalated from the positive electrode and the negative electrode.

A separator includes a porous substrate and a coating layer formed on at least one surface of the porous substrate. The coating layer may include an adhesive binder, and thus the adhesion to a positive electrode and a negative electrode may be increased. Among such adhesive binders, organic adhesive binders, for example, polyvinylidene fluoride (PVDF) adhesive binders, have desired or improved wet adhesion to a positive electrode, but the adhesion thereof to a negative electrode may be relatively low compared to the wet adhesion thereof to the positive electrode.

Therefore, it may be advantageous that wet adhesion to each of a positive electrode and a negative electrode is high. However, when the content of an adhesive binder is increased to increase wet adhesion to each of the positive electrode and the negative electrode, the resistance of a separator may increase, and air permeability may increase.

### SUMMARY

The present disclosure is directed to a separator for a rechargeable battery, which has low resistance.

The present disclosure is also directed to a separator for a rechargeable battery, which has high wet adhesion to each of a positive electrode and a negative electrode.

The present disclosure is also directed to a separator for a rechargeable battery, which includes a binder capable of increasing a degree of dissociation of lithium ions and forming an ion transport channel.

The present disclosure is also directed to a separator for a rechargeable battery, in which adhesion between a porous substrate, a heat-resistant layer, and an adhesive layer is increased.

The present disclosure is also directed to a separator for a rechargeable battery, which has a low thermal shrinkage rate.

The present disclosure is also directed to a rechargeable battery including the separator for a rechargeable battery.

According to an aspect of the present disclosure, a separator for a rechargeable battery includes a porous substrate and a coating layer formed on at least one surface of the porous substrate, wherein the coating layer includes a core-shell binder having a core and a shell surrounding the core, and the shell has an adhesive functional group at a terminal thereof and has an alkylene glycol group-containing structural unit and a cyano group-containing structural unit.

According to another aspect of the present disclosure, a separator for a lithium rechargeable battery includes a porous substrate and a coating layer formed on at least one surface of the porous substrate, wherein the coating layer includes a mixture of a core-shell binder and a linear binder, and the core-shell binder and the linear binder have the same terminal functional group.

According to still another aspect of the present disclosure, a separator for a lithium rechargeable battery includes a porous substrate and a coating layer formed on at least one surface of the porous substrate, wherein the coating layer includes a mixture of a core-shell binder and a linear binder, and a filler, the core-shell binder has a first adhesive functional group, and the linear binder has a second adhesive functional group.

According to another aspect of the present disclosure, a rechargeable battery includes a positive electrode, a negative electrode, and the separator located between the positive electrode and the negative electrode.

A separator for a rechargeable battery according to one example embodiment can have low resistance, can increase a degree of dissociation of lithium ions, can form an ion transport channel, and can have significantly high wet adhesion to each of a positive electrode and a negative electrode, thereby increasing the lifetime of a battery at room temperature and high temperature.

A separator for a lithium rechargeable battery according to one example embodiment has significantly high adhesion to each of a positive and a negative electrode and has high adhesion between a porous substrate, a heat-resistant layer, and an adhesive layer. A separator for a lithium rechargeable battery according to one example embodiment can have low resistance, can increase a degree of dissociation of lithium ions, can form an ion transport channel, and can increase the lifetime of a battery at room temperature and high temperature.

A separator for a rechargeable battery according to one example embodiment can have significantly high wet adhesion to each of a positive electrode and a negative electrode, thereby improving the safety and lifetime of a battery. A separator for a rechargeable battery according to an example embodiment of the present disclosure can have a low thermal shrinkage rate to increase the thermal stability of a battery and can have improved air permeability to reduce membrane resistance. A separator for a rechargeable battery according to one example embodiment can have low membrane resistance, can increase a degree of dissociation of lithium ions, and can form an ion transport channel, thereby increasing the lifetime of a battery at room temperature and at high temperature.

### BRIEF DESCRIPTION OF THE DRAWINGS

The above and other objects, features and advantages of the present disclosure may become more apparent to those of ordinary skill in the art by describing example embodiments thereof in detail with reference to the accompanying drawings, in which:
FIG. 1 and FIG. 2 are cross-sectional views of a separator for a lithium rechargeable battery according to one example embodiment;
FIG. 3 and FIG. 4 are cross-sectional views of a separator for a lithium rechargeable battery according to another example embodiment;
FIG. 5 is a cross-sectional view of a separator for a lithium rechargeable battery according to still another example embodiment; and
FIG. 6 to FIG. 9 are schematic cross-sectional views illustrating a lithium rechargeable battery according to one example embodiment.

### DETAILED DESCRIPTION

Hereinafter, example embodiments of the present disclosure are described in detail. However, the example embodiments are provided as examples, the present disclosure is not limited thereto, and the present disclosure is only defined by the scope of the claims to be described below.

Unless otherwise specified herein, when a part such as a layer, film, region, plate, and the like, is described as being "on" another part, it includes not only the case where the part is "directly on" the other part but also the case where there is another part therebetween.

Unless otherwise specified in this specification, anything indicated in the singular may also include the plural. Further, unless otherwise stated, "A or B" may mean "including A, including B, or including A and B."

As used herein, the term "a combination thereof" may mean a mixture, laminate, composite, copolymer, alloy, blend, and reaction product of the components.

Here, the term "particle diameter D50" refers to the average particle diameter, which means the diameter of particles with a cumulative volume of 50% by volume in the particle size distribution. The particle size distribution may be measured by methods known to those skilled in the art. For example, the particle size distribution may be measured using a particle size analyzer, a transmission electron micrograph, or a scanning electron micrograph. In another method, a D50 value may be obtained by measuring the particle diameter using a measuring device using dynamic light scattering, performing data analysis to count the number of particles for each particle size range, and then calculating the particle diameter therefrom. Alternatively, D50 may be measured using a laser diffraction method, which is preferred in this disclosure. For example, when measuring by laser diffraction, after the particles to be measured are dispersed in a dispersion medium, the particles are introduced into a commercially available laser diffraction particle diameter measuring device (e.g., Microtrac MT 3000) and irradiated with ultrasonic waves of about 28 kHz at an output of 60 W, and the D50 based on 50% by volume of the particle diameter distribution in the measurement device may be calculated.

In this specification, "(meth)acrylic" means acrylic and/or methacrylic.

Unless otherwise defined herein, "substitution" means that hydrogen in a compound is replaced by a substituent such as or including at least one of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br or I), a hydroxyl group (-OH), a nitro group (-NO₂), a cyano group (-CN), an amino group (-NRR') (wherein, R and R' are each independently hydrogen or a C1 to C6 alkyl group), a sulfobetaine group (-RR'N⁺(CH₂)ₙSO₃⁻, n is a natural number ranging from 1 to 10), a carboxybetaine group (-RR'N⁺(CH₂)ₙCOO⁻, n is a natural number ranging from 1 to 10) (wherein, R and R' are each independently a C1 to C20 alkyl group), an azido group (-N₃), an amidino group (-C(=NH)NH₂), a hydrazino group (-NHNH₂), a hydrazono group (=N(NH₂), a carbamoyl group (-C(O)NH₂), a thiol group (-SH), an acyl group (-C(=O)R, where R is hydrogen, a C1 to C6 alkyl group, a C1 to C6 alkoxy group, or a C6 to C12 aryl group), a carboxyl group (-COOH) or a salt thereof (-C(=O)OM, where M is an organic or inorganic cation), a sulfonic acid group (-SO₃H) or a salt thereof (-SO₃M, where M is an organic or inorganic cation), a phosphate group (-PO₃H₂) or a salt thereof (-PO₃MH or -PO₃M₂, where M is an organic or inorganic cation), and combinations thereof.

Hereinafter, a C1 to C3 alkyl group means a methyl group, an ethyl group, or a propyl group. A C1 to C10 alkylene group may be or include, for example, a C1 to C6 alkylene group, a C1 to C5 alkylene group, or a C1 to C3 alkylene group, such as a methylene group, an ethylene group, or a propylene group. A C3 to C20 cycloalkylene group may be or include, for example, a C3 to C10 cycloalkylene group or a C5 to C10 cycloalkylene group, such as a cyclohexylene group. A C6 to C20 arylene group may be or include, for example, a C6 to C10 arylene group, such as a phenylene group. A C3 to C20 heterocyclic group may be or include, for example, a C3 to C10 heterocyclic group, such as a pyridine group.

Hereinafter, "hetero" means including one or more heteroatoms such as or including at least one of N, O, S, Si, and P.

In chemical formulas, the * symbol indicates a moiety that is connected to the same or different atoms, groups, or structural units.

Unless otherwise specifically stated in the chemical formulas described herein, it may be assumed that hydrogen is bonded in the structure of the chemical formula.

Hereinafter, "alkali metal" refers to an element belonging to Group 1 of the periodic table, such as lithium, sodium, potassium, rubidium, cesium, or francium and may be present in a cationic or neutral state.

When describing a numerical range in this specification, 'X to Y' means 'X or more and Y or less (X ≤ and ≤ Y).'

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The present disclosure is described in detail. Hereinafter, only a lithium rechargeable battery is described. However, the present disclosure may also be applied to rechargeable batteries of different metal ions other than lithium rechargeable batteries.

### Separator for first lithium rechargeable battery

A separator for the lithium rechargeable battery includes a porous substrate and a coating layer formed on at least one surface of the porous substrate. The coating layer includes a core-shell binder having a core and a shell surrounding the core, and the shell has an adhesive functional group at a terminal thereof and has an alkylene glycol group-containing structural unit and a cyano group-containing structural unit.

The separator includes the coating layer including the core-shell binder. The separator has low resistance, increases a degree of dissociation of lithium ions, forms an ion transport channel, and has high wet adhesion to each of a positive electrode and a negative electrode. Therefore, the separator may increase the lifetime of a battery at room temperature and high temperature.

The wet adhesion of the separator to the positive electrode may be about 0.85 gf/mm or more.

The wet adhesion of the separator to the negative electrode may be about 0.79 gf/mm or more.

The separator may have a membrane resistance of about 0.65 Ω or less.

The core-shell binder may provide low resistance, a high degree of dissociation of lithium ions, an ion transport channel, and high wet adhesion to each of the positive electrode and the negative electrode.

The core-shell binder may be or include an aqueous adhesive binder. Therefore, the core-shell binder may be included in an aqueous solvent, for example, water, to provide an aqueous coating layer, thereby allowing an environmentally friendly separator to be manufactured.

The core-shell binder may be or include a particle-type binder. For example, an average particle diameter D50 of the particle-type core-shell binder may be about 700 nm or less, for example, 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410,420, 430, 440, 450, 460, 470, 480, 490, 500, 510, 520, 530, 540, 550, 560, 570, 580, 590, 600, 610, 620, 630, 640, 650, 660, 670, 680, 690, 700 nm, in the range of about 200 nm to about 700 nm, 300 nm to 700 nm, or 300 nm to 600 nm. The core-shell binder may be included in the coating layer while providing an adhesive effect in the above range.

The average particle diameter D50 may be adjusted by controlling a reaction temperature and a stirring speed during the preparation of the core-shell binder.

In the core-shell binder, an amount of the core may be in the range of about 40 wt% to about 90 wt%, for example, 50 wt% to 70 wt%, and an amount of the shell may be in the range of about 10 wt% to about 60 wt%, for example 30 wt% to 50 wt%. In the above range, the mechanical strength of the core-shell binder may be high, thereby increasing the strength of the separator and providing the effect of the separator.

### Core

The core may be or include an organic core and include a first copolymer.

The first copolymer may be or include a copolymer of at least one of an aromatic vinyl-based monomer, a diene-based monomer, a (meth)acrylate-based monomer, an ester-based monomer, an olefin-based monomer, and a urethane-based monomer, or a combination thereof.

According to one example embodiment, the first copolymer may be or include a copolymer of at least one of an aromatic vinyl-based monomer and a (meth)acrylate-based monomer, or a combination thereof.

The aromatic vinyl-based monomer may be or include at least one of styrene, a C₁-C₁₀ alkyl-substituted styrene, a halogen-substituted styrene, or a combination thereof. The C₁-C₁₀ alkyl-substituted styrene may include at least one of ethyl styrene, methyl styrene, or the like.

The (meth)acrylate-based monomer may be or include a (meth)acrylic acid ester having a substituted or unsubstituted C₁-C₁₀ alkyl group in an ester moiety.

The first copolymer may be or include a copolymer of the diene-based monomer and the aromatic vinyl-based monomer. The diene-based monomer may be or include a conjugated diene monomer such as 1,3-butadiene, isoprene, 2,3-dimethyl-1,3-butadiene, 2-ethyl-1,3-butadiene, 1,3-pentadiene, or chloroprene, or a non-conjugated diene monomer such as vinylnorbornene, dicyclopentadiene, or 1,4-hexadiene. The aromatic vinyl-based monomer is as described above.

The first copolymer may be or include a rubbery polymer. For example, the rubbery polymer may be or include at least one of butadiene rubber, styrene-butadiene rubber, acrylated styrene-butadiene rubber, acrylic rubber, acrylonitrile-butadiene rubber, acrylonitrile-butadiene-styrene rubber, isoprene rubber, isobutylene-isoprene rubber, ethylene-propylene rubber, ethylene-propylene-diene rubber, polyorganosiloxane-polyalkyl(meth)acrylate rubber, fluororubber, or a combination thereof.

The core may include a crosslinked form of the first copolymer or a non-crosslinked form of the first copolymer.

### Shell

The shell surrounds a surface of the core and includes a second copolymer connected to the surface of the core.

The second copolymer has an alkylene glycol group-containing structural unit and a cyano group-containing structural unit, and has an adhesive functional group at one terminal thereof. The other terminal of the second copolymer may be bonded to the surface of the core. The alkylene glycol group-containing structural unit and the cyano group-containing structural unit may be present between the surface of the core and the adhesive functional group. The alkylene glycol group-containing structural unit and the cyano group-containing structural unit may each be a repeating unit in the second copolymer.

The alkylene glycol group-containing structural unit that is a lithium ion-conductive unit may form a lithium ion transport channel and reduce the resistance of the separator, thereby improving the lifetime of a battery at room temperature and high temperature.

The cyano group-containing structural unit that is a lithium ion conductive unit may form a lithium ion transport channel and reduce the resistance of the separator, thereby improving the lifetime of a battery at room temperature and high temperature.

According to one example embodiment, the second copolymer may have the alkylene glycol group-containing structural unit and the cyano group-containing structural unit in a main chain of the second copolymer.

The alkylene glycol group-containing structural unit may be represented by Chemical Formula 1 below, and the second copolymer may include one or more units of Chemical Formula 1 below:

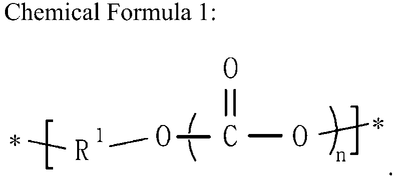

In Chemical Formula 1 above, n is equal to 0 or 1, and R¹ is or includes a linear or branched substituted or unsubstituted C₁-C₁₀ alkylene group).

In one example, Chemical Formula 1 may be a combination of one or more of Chemical Formulas 1-1, 1-2, and 1-3 below:

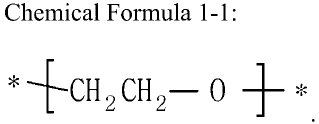

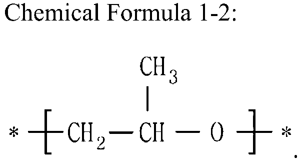

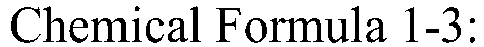

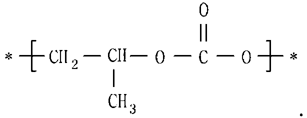

The alkylene glycol group-containing structural unit may be derived from at least one of ethylene glycol, n-propylene glycol, and propylene glycol carbonate. That is, the second copolymer may include a unit derived from at least one of polyethylene glycol (PEG), polypropylene glycol, and polypropylene glycol carbonate.

The alkylene glycol group-containing structural unit may be included in an amount in a range of about 15 mol% to about 85 mol%, 15 mol% to 75 mol%, 25 mol% to 85 mol%, 25 mol% to 70 mol%, 30 mol% to 75 mol%, or 30 mol% to 70 mol% with respect to 100 mol% of repeating units of the second copolymer. When the alkylene glycol group-containing structural unit is included within the above range, the separator may secure desired or improved oxidation resistance and exhibit adhesion, heat resistance, and air permeability.

The cyano group-containing structural unit may be represented by Chemical Formula 2 below, and the second copolymer may include one or more units of Chemical Formula 2 below:

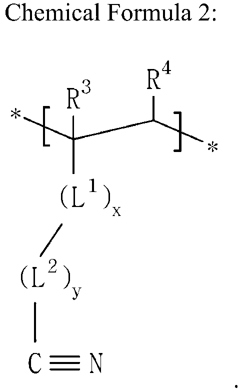

In Chemical Formula 2 above, R³ and R⁴ are each independently hydrogen or a C₁-C₃ alkyl group, L¹ is or includes -C(=O)-, -C(=O)O-, -OC(=O)-, -O-, or -C(=O)NH-, x is an integer ranging from 0 to 2, L² is or includes a substituted or unsubstituted C₁-C₁₀ alkylene group, a substituted or unsubstituted C₃-C₂₀ cycloalkylene group, a substituted or unsubstituted C₆-C₂₀ arylene group, or a substituted or unsubstituted C₃-C₂₀ heterocyclic group, and y is an integer ranging from 0 to 2.

The cyano group-containing structural unit may be or include a structural unit derived from, for example, (meth)acrylonitrile, alkene nitrile, cyanoalkyl (meth)acrylate, or 2-(vinyloxy)alkane nitrile. Here, the alkene may be or include a C₂-C₂₀ alkene, a C₂-C₁₀ alkene, or a C₂-C₆ alkene, and the alkyl may be or include a C₁-C₂₀ alkyl, a C₁-C₁₀ alkyl, or a C₁-C₆ alkyl. In addition, the alkane may be or include a C₁-C₂₀ alkane, a C₁-C₁₀ alkane, or a C₁-C₆ alkane.

The alkene nitrile may be or include, for example, allyl cyanide, 4-pentene nitrile, 3-pentene nitrile, 2-pentene nitrile, or 5-hexene nitrile. The cyanoalkyl (meth)acrylate may be or include, for example, cyanomethyl (meth)acrylate, cyanoethyl (meth)acrylate, cyanopropyl (meth)acrylate, or cyanooctyl (meth)acrylate. The 2-(vinyloxy)alkane nitrile may be or include, for example, 2-(vinyloxy)ethane nitrile or 2-(vinyloxy)propane nitrile.

The cyano group-containing structural unit may be included in an amount in a range of about 15 mol% to 80 mol%, for example, 15 mol% to 70 mol%, 25 mol% to 80 mol%, 25 mol% to 65 mol%, 30 mol% to 70 mol%, or 30 mol% to 65 mol% with respect to 100 mol% of the repeating units of the second copolymer. When the cyano group-containing structural unit is included within the above range, the separator may secure desired or improved oxidation resistance and may exhibit adhesion, heat resistance, and air permeability.

With respect to 100 mol% of the repeating units of the second copolymer, the total of the alkylene glycol group-containing structural unit and the cyano group-containing structural unit may be included in an amount of about 95 mol% or more, for example, in a range of about 95 mol% to about 100 mol%, or 100 mol%. The effect of the above-described separator may be readily implemented in the above range.

The second copolymer may further include a structural unit derived from (meth)acrylic acid or (meth)acrylate.

The second copolymer may include the structural unit derived from the (meth)acrylic acid or the (meth)acrylate in the main chain of the second copolymer.

For example, the second copolymer may include the structural unit derived from the (meth)acrylic acid.

The structural unit derived from the (meth)acrylic acid or the (meth)acrylate may include a lithium cation in a unit structure and thus may provide a lithium cation through a dissociation process of the lithium cation. Thus, the separator may provide an effect of increasing a concentration of lithium cations and reducing resistance. In addition, the separator may have a carboxyl functional group to further increase adhesion. In addition, the separator may further increase adhesion to ensure high attachment to an electrode and may provide desired or improved heat resistance, air permeability, and oxidation resistance. In addition, the dispersibility in a composition for the coating layer including the core-shell binder may be increased.

In the structural unit derived from the (meth)acrylate or the (meth)acrylic acid, the (meth)acrylate may be or include a conjugate base of (meth)acrylic acid, a (meth)acrylic acid salt, or a derivative thereof. The structural unit derived from the (meth)acrylate or the (meth)acrylic acid may be represented by, for example, Chemical Formula 3, 4, or 5 below, or a combination thereof:

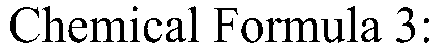

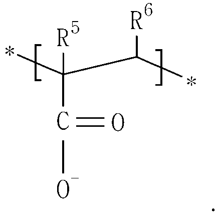

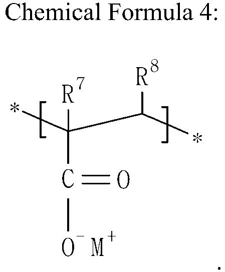

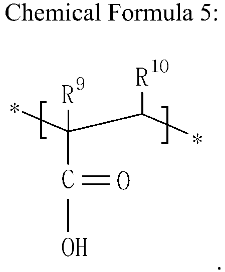

In Chemical Formulas 3 to 5 above, R⁵, R⁶, R⁷, R⁸, R⁹, and R¹⁰ are each independently hydrogen or a methyl group, and in Chemical Formula 4 above, M is or includes an alkali metal.

The alkali metal may be or include, for example, at least one of lithium, sodium, potassium, rubidium, or cesium. For example, the alkali metal may be lithium.

The structural unit derived from the (meth)acrylate or the (meth)acrylic acid in the repeating units of the second copolymer may be included in an amount in a range of about 0 mol% to about 70 mol%, for example, 0.1 mol% to 30 mol%, 0.1 mol% to 25 mol%, 1 mol% to 25 mol%, 1 mol% to 20 mol%, or 5 mol% to 20 mol%. When the structural unit derived from the (meth)acrylate or the (meth)acrylic acid is included in the above range, the separator may exhibit desired or improved adhesion, heat resistance, air permeability, and oxidation resistance.

The structural unit derived from the (meth)acrylate or the (meth)acrylic acid may include a structural unit represented by Chemical Formula 4 above and a structural unit represented by Chemical Formula 5 above, and in this case, the structural unit represented by Chemical Formula 4 above and the structural unit represented by Chemical Formula 5 above may be included in a molar ratio in a range of about 10:1 to about 1:2, or 10:1 to 1:1, or 5:1 to 1:1.

With respect to 100 mol% of the repeating units of the second copolymer, the total of the alkylene glycol group-containing structural unit, the cyano group-containing structural unit, and the structural unit derived from the (meth)acrylate or the (meth)acrylic acid may be included in an amount of about 95 mol% or more, for example, in a range of about 95 mol% to about 100 mol%, or 100 mol%. The effect of the above-described separator may be readily implemented in the above range.

The second copolymer may be provided as various forms such as an alternating polymer in which the structural units are alternately distributed, a random polymer in which the structural units are randomly distributed, or a graft polymer in which some of the structural units are grafted.

The shell has an adhesive functional group at one terminal thereof.

The shell may include a second copolymer having the same adhesive functional group at one terminal thereof, or may include a second copolymer having different types of adhesive functional groups at one terminal thereof.

The second copolymer may have one type of adhesive functional group at one terminal thereof or may have two or more different types of adhesive functional groups at one terminal thereof.

The adhesive functional group may be bonded to the alkylene glycol group-containing structural unit, the cyano group-containing structural unit, or the structural unit derived from the (meth)acrylate or the (meth)acrylic acid.

In one example, the adhesive functional group may be bonded to the alkylene glycol group-containing structural unit.

The adhesive functional group may be or include a functional group capable of forming a chemical bond or a physical bond. For example, the adhesive functional group may undergo hydrogen bond or covalent bond reforming.

The adhesive functional group may include oxygen, nitrogen or sulfur with high electronegativity, and may be or include, for example, a combination of one or more of a - COOH group, an -OH group, an -NH₂ group, a -C(=O)H group, a -C(=O)NH₂ group, and a - SS- group.

The adhesive functional group may undergo metathesis and may be or include a functional group having, for example, a -SS- group. For example, a functional group having the -SS- group may be represented by Chemical Formula 6 below:

Chemical Formula 6: *-S-S-R¹¹.

In Chemical Formula 6 above, R¹¹ is or includes a substituted or unsubstituted C₁-C₁₀ alkyl group or a substituted or unsubstituted C₆-C₁₀ aryl group.

R¹¹ may be or include a C₁-C₅ alkyl group substituted with an amine group or a C₆-C₁₀ aryl group substituted with an amine group.

The functional group having the -SS- group may be or include *-S-S-CH₂CH₂-NH₂ or *-S-S-C₆H₅-NH₂.

The adhesive functional group may be bonded directly to the alkylene glycol group-containing structural unit, the cyano group-containing structural unit, or the structural unit derived from the (meth)acrylate or the (meth)acrylic acid.

The adhesive functional group may also be bonded to the alkylene glycol group-containing structural unit, the cyano group-containing structural unit, or the structural unit derived from the (meth)acrylate or the (meth)acrylic acid through a linker.

The linker may be or include a functional group having at least one of carbon, oxygen, nitrogen, and sulfur in a main chain.

The linker may be represented by Chemical Formulas 7-1 to 7-12 below:

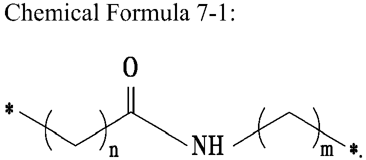

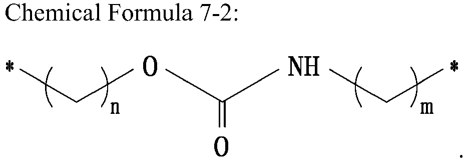

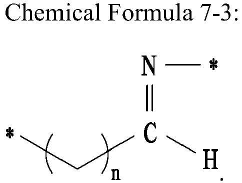

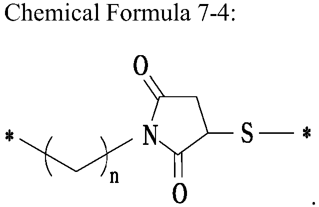

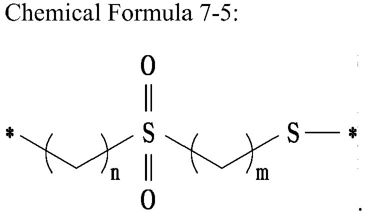

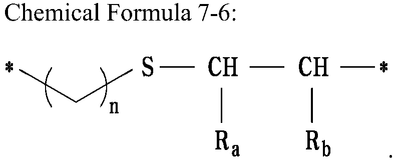

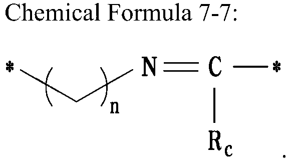

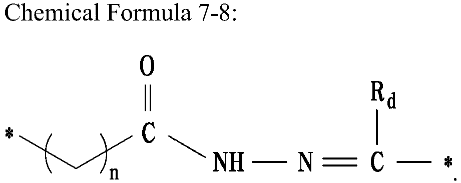

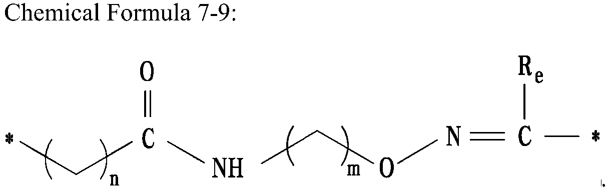

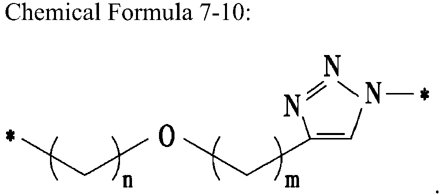

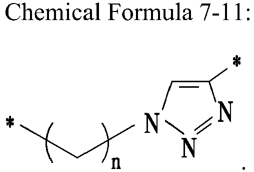

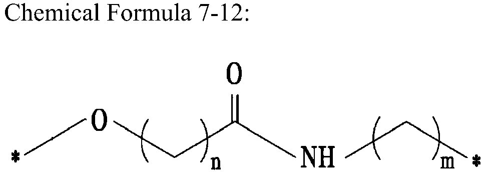

In Chemical Formulas 7-1 to 7-12 above, n and m are each an integer greater than or equal to 0, and Rₐ, R_{b}, R_{c}, Rₐ, and Rₑ are each independently hydrogen or a substituted or unsubstituted C₁-C₁₀ alkyl group.

The linker may be bonded to the alkylene glycol group-containing structural unit.

The linker may be bonded to the alkylene glycol group-containing structural unit through a typical method known to those skilled in the art. For example, reference may be made to the following schemes.

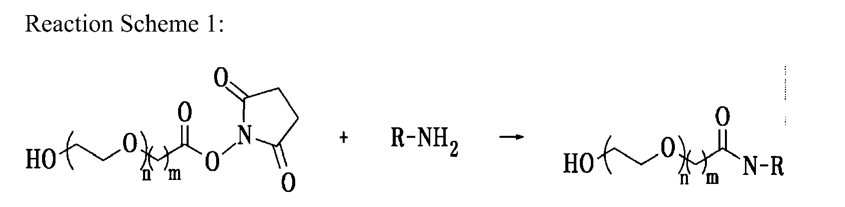

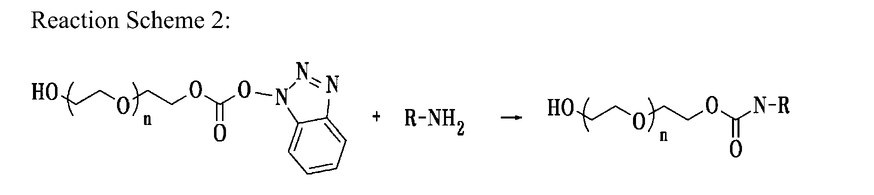

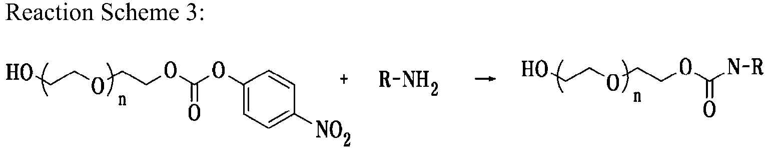

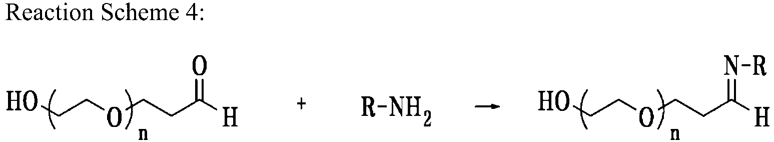

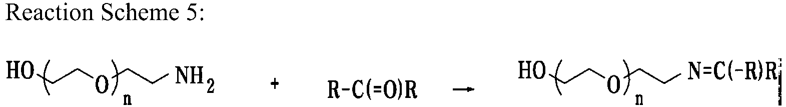

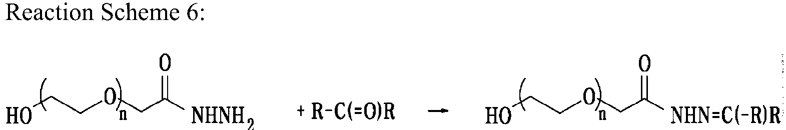

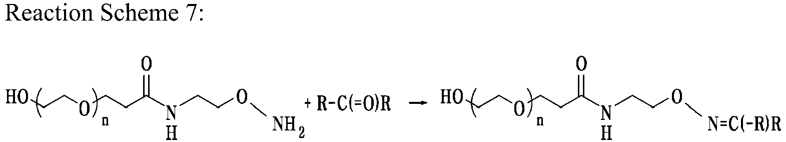

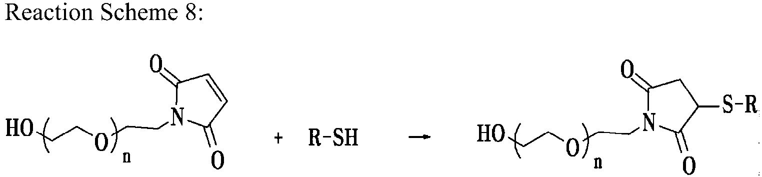

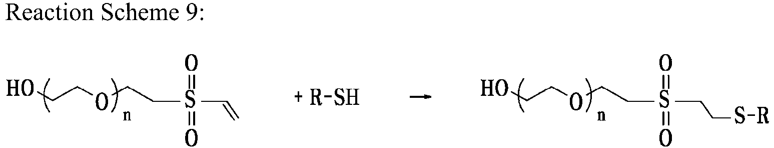

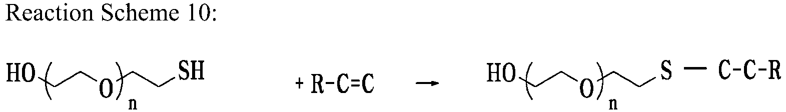

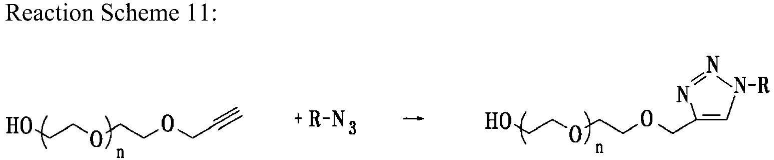

The second copolymer may be prepared by polymerizing a monomer providing a cyano group-containing structural unit (for example, a monomer providing a unit of Chemical Formula 2 above) and a monomer providing an alkylene glycol group-containing structural unit (for example, a monomer providing a unit of Chemical Formula 1 above) and then introducing an adhesive functional group at a terminal thereof.

The second copolymer may be or include a copolymer of a monomer mixture including (A) a prepolymer of an alkylene glycol group-containing structural unit having an adhesive functional group at a terminal thereof and (B) a monomer providing a cyano group-containing structural unit. In this case, a mass ratio may be set such that, in a total of 100 parts by mass, (A) is included in an amount in a range of about 10 parts by mass to about 90 parts by mass, for example,
10,11,12,13,14,15,16,17,18,19,20,21,22,23,24,25,26,27,28,29,30,31,32,33,34,35,36,37,38,39, 40,41,42,43,44,45,46,47,48,49,50,51,52,53,54,55,56,57,58,59,60,61,62,63,64,65,66,67,68,69, 70,71,72,73,74,75,76,77,78,79,80,81,82,83,84,85,86,87,88,89,90 parts by mass, 20 parts by mass to 80 parts by mass or 30 parts by mass to 70 parts by mass, and (B) is included in an amount in a range of about 10 parts by mass to about 90 parts by mass, for example, 10,11,12,13,14,15,16,17,18,19,20,21,22,23,24,25,26,27,28,29,30,31,32,33,34,35,36,37,38,39, 40,41,42,43,44,45,46,47,48,49,50,51,52,53,54,55,56,57,58,59,60,61,62,63,64,65,66,67,68,69, 70,71,72,73,74,75,76,77,78,79,80,81,82,83,84,85,86,87,88,89,90 parts by mass, 20 parts by mass to 80 parts by mass or 30 parts by mass to 70 parts by mass.

The second copolymer may be or include a copolymer of a monomer mixture including (A) a prepolymer of an alkylene glycol group-containing structural unit having an adhesive functional group at a terminal thereof, (B) a monomer providing a cyano group-containing structural unit, and (C) (meth)acrylate or (meth)acrylic acid. In this case, a mass ratio may be set such that, in a total of 100 parts by mass, (A) is included in an amount in a range of about 10 parts by mass to about 80 parts by mass, for example, 10,11,12,13,14,15,16,17,18,19,20,21,22,23,24,25,26,27,28,29,30,31,32,33,34,35,36,37,38,39, 40,41,42,43,44,45,46,47,48,49,50,51,52,53,54,55,56,57,58,59,60,61,62,63,64,65,66,67,68,69, 70,71,72,73,74,75,76,77,78,79,80 parts by mass, 20 parts by mass to 70 parts by mass, 30 parts by mass to 70 parts by mass, or 70 parts by mass to 60 parts by mass, (B) is included in an amount in a range of about 10 parts by mass to about 80 parts by mass, for example, 10,11,12,13,14,15,16,17,18,19,20,21,22,23,24,25,26,27,28,29,30,31,32,33,34,35,36,37,38,39, 40,41,42,43,44,45,46,47,48,49,50,51,52,53,54,55,56,57,58,59,60,61,62,63,64,65,66,67,68,69, 70,71,72,73,74,75,76,77,78,79,80 parts by mass, 20 parts by weight to 70 parts by mass, 30 parts by mass to 70 parts by mass, or 30 parts by mass to 60 parts by mass, and (C) is included in an amount in a range of about 1 part by mass to about 30 parts by mass, for example, 1,2,3,4,5,6,7,8,9,10,11,12,13,14,15,16,17,18,19,20,21,22,23,24,25,26,27,28,29,30 parts by mass, 5 parts by mass to 30 parts by mass or 5 parts by mass to 20 parts by mass.

The core-shell binder in the coating layer may be included in an amount in a range of about 5 wt% to about 30 wt%, for example, 8 wt% to 25 wt%, 8 wt% to 20 wt%, or 10 wt% to 20 wt%, referring to the total weight of the coating layer. The effect of the separator may be readily implemented in the above range.

The coating layer may further include an adhesive binder in addition to the core-shell binder. For example, the adhesive binder may include at least one of an acrylate-based compound or a derivative thereof, a diallyl phthalate-based compound or a derivative thereof, a polyimide-based compound or a derivative thereof, or a polyurethane-based compound or a derivative thereof. For example, the adhesive binder may be crosslinked polymethyl methacrylate.

The coating layer may further include a binder in addition to the core-shell binder.

The binder may be or include a heat-resistant binder or a heat-resistant adhesive binder.

The binder may be or include a non-core-shell binder rather than a core-shell binder.

The heat-resistant binder may include a (meth)acrylic binder including a sulfonate group-containing structural unit. The (meth)acrylic binder may further include at least one of a structural unit derived from (meth)acrylate or (meth)acrylic acid, a cyano group-containing structural unit, and a structural unit derived from (meth)acrylamide.

The heat-resistant binder in the coating layer may be included in an amount in a range of about 1 wt% to about 25 wt%, for example, 1 wt% to 20 wt%, 1 wt% to 15 wt%, or 2 wt% to 15 wt%, referring to the total weight of the coating layer.

The coating layer may further include a filler.

The filler may have an average particle diameter D50 of about 0.4 µm or less, for example, 0.35 µm or less, 0.3 µm or less, or in a range of about 0.1 µm to about 0.3 µm. In the above range, there may be an effect of improving heat resistance properties.

A surface of the filler may or may not be modified.

The filler may be or include, for example, at least one of an inorganic filler, an organic filler, an organic-inorganic composite filler, or a combination thereof. The inorganic filler may include a ceramic material capable of improving heat resistance. The inorganic filler may include, for example, at least one of a metal oxide, a metalloid oxide, a metal fluoride, a metal hydroxide, or a combination thereof. The inorganic filler may include, for example, at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but the present disclosure is not limited thereto. The organic filler may include at least one of an acrylic compound, an imide compound, an amide compound, or a combination thereof, but the present disclosure is not limited thereto. The organic filler may have a core-shell structure, but the present disclosure is not limited thereto. For example, the filler may include boehmite.

The filler may have a spherical, plate-like, cubic, or amorphous shape. For example, the filler may have a cubic shape, and the cubic shape may facilitate improvement in air permeability.

The filler may be included in an appropriate or desired amount with respect to the heat-resistant binder. According to one example embodiment, the heat-resistant binder and the filler may be included in a mass ratio in a range of about 1:10 to about 1:50, for example, a mass ratio of 1:20 to 1:30. In the above range, there may be an effect of improving heat resistance properties in an electrolyte.

The filler in the coating layer may be included in an amount in a range of about 50 wt% to about 99 wt%, for example, 70 wt% to 99 wt%, 75 wt% to 99 wt%, 80 wt% to 99 wt%, 85 wt% to 99 wt%, 90 wt% to 99 wt%, or 95 wt% to 99 wt%, referring to the total weight of the coating layer. When the filler is included within the above range, desired or improved heat resistance, durability, oxidation resistance, and stability can be exhibited.

The coating layer may be or include a single layer including the core-shell binder, the heat-resistant binder, and the filler. In one example, the coating layer may be formed of or include a composition including the core-shell binder, the heat-resistant binder, and the filler.

The coating layers may each have a thickness in the range of about 0.01 µm to about 20 µm and may have a thickness in a range of about 1 µm to about 10 µm, or 1 µm to 5 µm, or 1 µm to 3 µm within the above range.

The coating layer may include a heat-resistant layer including the heat-resistant binder and the filler, and an adhesive layer located on the heat-resistant layer and including the core-shell binder. The heat-resistant layer may be formed of or include a composition including the heat-resistant binder and the filler without the core-shell binder.

The heat-resistant layers may each have a thickness in the range of about 0.01 µm to about 20 µm and may have a thickness in a range of about 1 µm to about 10 µm, 1 µm to 5 µm, or 1 µm to 3 µm within the above range.

The adhesive layers may each have a thickness in the range of about 0.01 µm to about 20 µm and may have a thickness in a range of about 0.1 µm to about 10 µm, 0.1 µm to 5 µm, or 0.1 µm to 1 µm within the above range.

The coating layer is located on at least one surface of the porous substrate.

A ratio of the thickness of the coating layer to the thickness of the porous substrate may be in the range of about 0.05 to about 0.5, for example, 0.05 to 0.4, or 0.05 to 0.3, or 0.1 to 0.2. In the above range, the separator can exhibit desired or improved air permeability, heat resistance, and adhesion. Here, the "thickness of the coating layer" is a thickness of one coating layer when the coating layer is formed on only one surface of the porous substrate, and is a total thickness of two coating layers when the coating layers are formed on both surfaces of the porous substrate.

### Porous substrate

The porous substrate may be or include a substrate that has a plurality of pores and is typically used in electrochemical elements. Without being limited thereto, the porous substrate may be or include a polymer film formed of or including any one polymer such as or including at least one of polyolefins such as polyethylene or polypropylene, polyesters such as polyethylene terephthalate or polybutylene terephthalate, polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a polymer membrane formed of or including a copolymer or mixture of two or more thereof.

The porous substrate may be or include, for example, a polyolefin-based substrate including polyolefin, and the polyolefin-based substrate may have a desired or improved shutdown function and thus may contribute to improving the safety of a battery. The polyolefin-based substrate may be or include at least one of, for example, a polyethylene single-layer film, a polypropylene single-layer film, a polyethylene/polypropylene two-layer film, a polypropylene/polyethylene/polypropylene three-layer film, and a polyethylene/polypropylene/polyethylene three-layer film. In addition, a polyolefin-based resin may include a non-olefin resin in addition to an olefin resin, or may include a copolymer of olefin and a non-olefin monomer.

The porous substrate may have a thickness in a range of about 1 µm to about 40 µm, for example, 1 µm to 30 µm, 1 µm to 20 µm, or 5 µm to 15 µm.

The separator for a lithium rechargeable battery may exhibit desired or improved air permeability, and may have an air permeability value of, for example, less than about 200 sec/100cc, or for example, 190 sec/100cc or less or 180 sec/100cc or less. That is, the separator may have an air permeability value of less than about 40 sec/100cc·per unit thickness of 1 µm, for example, 30 sec/100cc·or less per unit thickness of 1 µm, or 25 sec/100cc·or less per unit thickness of 1 µm. Here, air permeability refers to the time (seconds) for 100 cc of air to pass through a unit thickness of the separator. Air permeability per unit thickness may be obtained by measuring air permeability for the entire thickness of the separator and dividing the measured air permeability by a thickness. The air permeability may be measured by measuring the time (seconds) for 100 cc of air to pass through the separator using a measuring device (EG01-55-1MR manufactured by Asahi Seiko).

The separator for a rechargeable battery may be formed by coating one surface, or both surfaces, of a porous substrate with a composition for forming a coating layer, and then drying the composition. The drying may be performed using a typical method known to those skilled in the art.

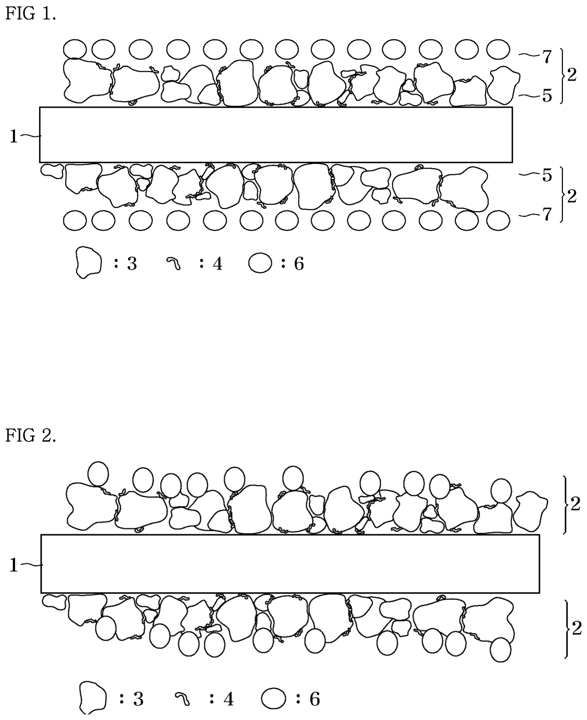

FIG. 1 is a cross-sectional view illustrating a separator for a lithium rechargeable battery according to one example embodiment.

Referring to FIG. 1, the separator for a lithium rechargeable battery includes a porous substrate 1, a coating layer 2 which is a laminate of a heat-resistant layer 5 and an adhesive layer 7, located on each of the opposite surfaces of the porous substrate 1. The heat-resistant layer 5 may include a filler 3 and a heat-resistant binder 4. The adhesive layer 7 may be located on the heat-resistant layer 5 and may include a core-shell binder 6.

FIG. 2 is a cross-sectional view illustrating a separator for a lithium rechargeable battery according to another example embodiment.

Referring to FIG. 2, the separator for a lithium rechargeable battery includes a porous substrate 1 and coating layers 2 located on both surfaces of the porous substrate 1. The coating layer 2 may include a filler 3, a heat-resistant binder 4, and a core-shell binder 6.

The coating layer may further include a linear binder. In this regard, a separator for a second lithium rechargeable battery and a separator for a third lithium rechargeable battery are described in detail below.

### Separator for second lithium rechargeable battery

The separator for a lithium rechargeable battery includes a porous substrate and a coating layer formed on at least one surface of the porous substrate, wherein the coating layer may include a mixture of a core-shell binder and a linear binder, and the core-shell binder and the linear binder may have the same terminal functional group.

The core-shell binder and the linear binder may have the same terminal functional group. The same terminal functional groups may interact with each other to increase the degree of bonding between the core-shell binder and the linear binder, thereby increasing the adhesion of the coating layer to each of a positive electrode and a negative electrode.

The linear binder may relatively readily fill an empty space in the coating layer as compared to the core-shell binder. For example, when the coating layer includes a filler to be described below, the linear binder may readily fill an empty space between the fillers. Therefore, the separator may have high adhesion between the coating layer and the porous substrate. In addition, when the coating layer includes a heat-resistant layer including a filler as described below, and an adhesive layer located on the heat-resistant layer, the separator may provide high adhesion between the heat-resistant layer and the adhesive layer.

The terminal functional group is described in more detail below.

### Core-shell binder

The coating layer includes the core-shell binder. The separator has low resistance, is capable of increasing a degree of dissociation of lithium ions and forming an ion transport channel, and has high wet adhesion to each of a positive electrode and a negative electrode. The separator may increase the lifetime of a battery at room temperature and high temperature.

The wet adhesion of the separator to the positive electrode may be about 1.1 gf/mm or more.

The wet adhesion of the separator to the negative electrode may be about 0.84 gf/mm or more.

The core-shell binder may provide low resistance, a high degree of dissociation of lithium ions, an ion transport channel, and high adhesion to each of the positive electrode and the negative electrode.

The core-shell binder may be or include an aqueous adhesive binder. Therefore, the core-shell binder may be used in an aqueous solvent, for example, water, to provide an aqueous coating layer, thereby allowing an environmentally friendly separator to be manufactured.

The core-shell binder may be or include a particle-type binder. For example, an average particle diameter D50 of the particle-type core-shell binder may be about 700 nm or less, for example, 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410,420, 430, 440, 450, 460, 470, 480, 490, 500, 510, 520, 530, 540, 550, 560, 570, 580, 590, 600, 610, 620, 630, 640, 650, 660, 670, 680, 690, 700 nm, in the range of about 200 nm to about 700 nm, 300 nm to 700 nm, or 300 nm to 600 nm.

The average particle diameter D50 may be adjusted by controlling a reaction temperature and a stirring speed during the preparation of the core-shell binder.

In the core-shell binder, an amount of the core may be in the range of about 40 wt% to about 90 wt%, for example, 50 wt% to 70 wt%, and an amount of the shell may be in the range of about 10 wt% to about 60 wt%, for example 30 wt% to 50 wt%. In the above ranges, the mechanical strength of the core-shell binder may be high, thereby increasing the strength of the separator and providing the effect of the separator.

### Core

The core may be or include an organic core and may include a first copolymer.

The details of the core are substantially the same as the details of the core described in the core-shell binder of the separator for a first lithium rechargeable battery. Accordingly, a detailed description of the core is omitted.

### Shell

The shell surrounds a surface of the core and includes a second copolymer connected to the surface of the core.

The second copolymer has an alkylene glycol group-containing structural unit and a cyano group-containing structural unit, and has an adhesive functional group at one terminal thereof. The other terminal of the second copolymer may be bonded to the surface of the core. The alkylene glycol group-containing structural unit and the cyano group-containing structural unit may be present between the surface of the core and the adhesive functional group.

The alkylene glycol group-containing structural unit may be or include a lithium ion-conductive unit, and may form a lithium ion transport channel and reduce the resistance of the separator, thereby improving the lifetime of a battery at room temperature and high temperature.

The cyano group-containing structural unit may be or include a lithium ion conductive unit and may form a lithium ion transport channel and reduce the resistance of the separator, thereby improving the lifetime of a battery at room temperature and high temperature.

The second copolymer may have the alkylene glycol group-containing structural unit and the cyano group-containing structural unit in a main chain of the second copolymer.

The alkylene glycol group-containing structural unit may be represented by Chemical Formula 1 above, and the second copolymer may include one or more units of Chemical Formula 1 above.

Chemical Formula 1 above may be a combination of one or more of Chemical Formulas 1-1, 1-2, and 1-3 above.

The alkylene glycol group-containing structural unit may be derived from at least one of ethylene glycol, n-propylene glycol, and propylene glycol carbonate. That is, the second copolymer may include a unit derived from at least one of PEG, polypropylene glycol, and polypropylene glycol carbonate.

The alkylene glycol group-containing structural unit may be included in an amount in a range of about 15 mol% to about 85 mol%, 15 mol% to 75 mol%, 25 mol% to 85 mol%, 25 mol% to 70 mol%, 30 mol% to 75 mol%, or 30 mol% to 70 mol% with respect to 100 mol% of repeating units of the second copolymer. When the alkylene glycol group-containing structural unit is included within the above range, the separator may secure desired or improved oxidation resistance and may exhibit adhesion, heat resistance, and air permeability.

The cyano group-containing structural unit may be represented by Chemical Formula 2 above, and the second copolymer may include one or more units of Chemical Formula 2 above:
The cyano group-containing structural unit may be or include a structural unit derived from, for example, (meth)acrylonitrile, alkene nitrile, cyanoalkyl (meth)acrylate, or 2-(vinyloxy)alkane nitrile. Here, the alkene may be or include a C₂-C₂₀ alkene, a C₂-C₁₀ alkene, or a C₂-C₆ alkene, and the alkyl may be or include a C₁-C₂₀ alkyl, a C₁-C₁₀ alkyl, or a C₁-C₆ alkyl. In addition, the alkane may be or include a C₁-C₂₀ alkane, a C₁-C₁₀ alkane, or a C₁-C₆ alkane.

The alkene nitrile may be or include, for example, at least one of allyl cyanide, 4-pentene nitrile, 3-pentene nitrile, 2-pentene nitrile, or 5-hexene nitrile. The cyanoalkyl (meth)acrylate may be or include, for example, at least one of cyanomethyl (meth)acrylate, cyanoethyl (meth)acrylate, cyanopropyl (meth)acrylate, or cyanooctyl (meth)acrylate. The 2-(vinyloxy)alkane nitrile may be or include, for example, 2-(vinyloxy)ethane nitrile or 2-(vinyloxy)propane nitrile.

The cyano group-containing structural unit may be included in an amount in a range of about 15 mol% to about 80 mol%, for example, 15 mol% to 70 mol%, 25 mol% to 80 mol%, 25 mol% to 65 mol%, 30 mol% to 70 mol%, or 30 mol% to 65 mol% with respect to 100 mol% of the repeating units of the second copolymer. When the cyano group-containing structural unit is included within the above range, the separator may secure desired or improved oxidation resistance and may exhibit adhesion, heat resistance, and air permeability.

According to one example embodiment, with respect to 100 mol% of the repeating units of the second copolymer, the total of the alkylene glycol group-containing structural unit and the cyano group-containing structural unit may be included in an amount in a range of about 95 mol% or more, for example, about 95 mol% to about 100 mol%, or 100 mol%. The effect of the above-described separator may be readily implemented in the above range.

The second copolymer may further include a structural unit derived from (meth)acrylic acid or (meth)acrylate. The second copolymer may include the structural unit derived from the (meth)acrylic acid or the (meth)acrylate in the main chain of the second copolymer. For example, the second copolymer may include the structural unit derived from the (meth)acrylic acid.

The structural unit derived from the (meth)acrylic acid or the (meth)acrylate may include a lithium cation in a unit structure, and thus may provide a lithium cation through a dissociation process of the lithium cation. Thus, the separator may provide an effect of increasing a concentration of lithium cations and reducing resistance. In addition, the separator may have a carboxyl functional group to further increase adhesion. In addition, the separator may further increase adhesion to ensure high attachment to an electrode and may provide desired or improved heat resistance, air permeability, and oxidation resistance. In addition, the dispersibility in a composition for the coating layer including the core-shell binder may be increased.

In the structural unit derived from the (meth)acrylate or the (meth)acrylic acid, the (meth)acrylate may be or include a conjugate base of (meth)acrylic acid, a (meth)acrylic acid salt, or a derivative thereof. The structural unit derived from the (meth)acrylate or the (meth)acrylic acid may be represented by, for example, Chemical Formula 3, 4, or 5 above, or a combination thereof:
The structural unit derived from the (meth)acrylate or the (meth)acrylic acid in the repeating units of the second copolymer may be included in an amount in a range of about 0.1 mol% to about 30 mol%, 0.1 mol% to 25 mol%, 1 mol% to 25 mol%, 1 mol% to 20 mol%, or 5 mol% to 20 mol%. When the structural unit derived from the (meth)acrylate or the (meth)acrylic acid is included in the above range, the separator may exhibit desired or improved adhesion, heat resistance, air permeability, and oxidation resistance.

As an example, the structural unit derived from the (meth)acrylate or the (meth)acrylic acid may include a structural unit represented by Chemical Formula 4 above and a structural unit represented by Chemical Formula 5 above, and in this case, the structural unit represented by Chemical Formula 4 above and the structural unit represented by Chemical Formula 5 above may be included in a molar ratio in a range of about 10:1 to about 1:2, or 10:1 to 1:1, or 5:1 to 1:1.

With respect to 100 mol% of the repeating units of the second copolymer, the total of the alkylene glycol group-containing structural unit, the cyano group-containing structural unit, and the structural unit derived from the (meth)acrylate or the (meth)acrylic acid may be included in an amount of about 95 mol% or more, for example, in a range of about 95 mol% to about 100 mol%, or 100 mol%. The effect of the above-described separator may be readily implemented in the above range.

The second copolymer may be provided as various forms such as an alternating polymer in which the structural units are alternately distributed, a random polymer in which the structural units are randomly distributed, or a graft polymer in which some of the structural units are grafted.

The shell has a functional group at one terminal thereof. The functional group may be or include an adhesive functional group.

The shell may include a second copolymer having the same adhesive functional group at one terminal thereof or may include a second copolymer having different types of adhesive functional groups at one terminal thereof.

The second copolymer may have one type of adhesive functional group at one terminal thereof, or may have two or more different types of adhesive functional groups at one terminal thereof.

The adhesive functional group may be bonded to the alkylene glycol group-containing structural unit, the cyano group-containing structural unit, or the structural unit derived from the (meth)acrylate or the (meth)acrylic acid.

The adhesive functional group may be bonded to the alkylene glycol group-containing structural unit.

The adhesive functional group may be or include a functional group capable of forming a chemical bond or a physical bond. For example, the adhesive functional group may undergo hydrogen bond or covalent bond reforming.

The adhesive functional group may include oxygen, nitrogen or sulfur with high electronegativity, and may be or include, for example, a combination of one or more of functional groups having a -COOH group, an -OH group, an -NH₂ group, a -C(=O)H group, a -C(=O)NH₂ group, and a -SS- group.

The adhesive functional group may undergo metathesis and may be or include a functional group having, for example, a -SS- group. For example, the functional group having the -SS- group may be represented by Chemical Formula 6 above.

In Chemical Formula 6 above, R¹¹ may be or include a C₁-C₅ alkyl group substituted with an amine group or a C₆-C₁₀ aryl group substituted with an amine group.

The functional group having the -SS- group may be *-S-S-CH₂CH₂-NH₂ or *-S-S-C₆H₅-NH₂.

The adhesive functional group may be bonded directly to the alkylene glycol group-containing structural unit, the cyano group-containing structural unit, or the structural unit derived from the (meth)acrylate or the (meth)acrylic acid.

The adhesive functional group may be bonded to the alkylene glycol group-containing structural unit, the cyano group-containing structural unit, or the structural unit derived from the (meth)acrylate or the (meth)acrylic acid through a linker.

The linker may be or include a functional group having at least one of carbon, oxygen, nitrogen, and sulfur in a main chain.

The linker may be represented by Chemical Formulas 7-1 to 7-12 above.

The linker may be bonded to the alkylene glycol group-containing structural unit.

In this regard, the linker may be bonded to the alkylene glycol group-containing structural unit through a typical method known to those skilled in the art. For example, reference may be made to the schemes of Reaction Schemes 1 to 11 above.

The second copolymer may be prepared by polymerizing a monomer providing a cyano group-containing structural unit (for example, a monomer providing a unit of Chemical Formula 2 above) and a monomer providing an alkylene glycol group-containing structural unit (for example, a monomer providing a unit of Chemical Formula 1 above) and then introducing an adhesive functional group at a terminal thereof.

The second copolymer may be or include a copolymer of a monomer mixture including (A) a prepolymer of an alkylene glycol group-containing structural unit having an adhesive functional group at a terminal thereof and (B) a monomer providing a cyano group-containing structural unit. In this case, a mass ratio may be set such that, in a total of 100 parts by mass, (A) is included in an amount in a range of about 10 parts by mass to about 90 parts by mass, for example,
10,11,12,13,14,15,16,17,18,19,20,21,22,23,24,25,26,27,28,29,30,31,32,33,34,35,36,37,38,39, 40,41,42,43,44,45,46,47,48,49,50,51,52,53,54,55,56,57,58,59,60,61,62,63,64,65,66,67,68,69, 70,71,72,73,74,75,76,77,78,79,80,81,82,83,84,85,86,87,88,89,90 parts by mass, 20 parts by mass to 80 parts by mass, 30 parts by mass to 70 parts by mass, or 30 parts by mass to 50 parts by mass, and (B) is included in an amount in a range of about 10 parts by mass to about 90 parts by mass, for example, 10,11,12,13,14,15,16,17,18,19,20,21,22,23,24,25,26,27,28,29,30,31,32,33,34,35,36,37,38,39, 40,41,42,43,44,45,46,47,48,49,50,51,52,53,54,55,56,57,58,59,60,61,62,63,64,65,66,67,68,69, 70,71,72,73,74,75,76,77,78,79,80,81,82,83,84,85,86,87,88,89,90 parts by mass, 20 parts by mass to 80 parts by mass, 30 parts by mass to 70 parts by mass, or 50 parts by mass to 70 parts by mass.

The second copolymer may be or include a copolymer of a monomer mixture including (A) a prepolymer of an alkylene glycol group-containing structural unit having an adhesive functional group at a terminal thereof, (B) a monomer providing a cyano group-containing structural unit, and (C) (meth)acrylate or (meth)acrylic acid. In this case, a mass ratio may be set such that, in a total of 100 parts by mass, (A) is included in an amount in a range of about 10 parts by mass to about 80 parts by mass, for example, 10,11,12,13,14,15,16,17,18,19,20,21,22,23,24,25,26,27,28,29,30,31,32,33,34,35,36,37,38,39, 40,41,42,43,44,45,46,47,48,49,50,51,52,53,54,55,56,57,58,59,60,61,62,63,64,65,66,67,68,69, 70,71,72,73,74,75,76,77,78,79,80 parts by mass, 20 parts by mass to 70 parts by mass, 20 parts by mass to 60 parts by mass, or 20 parts by mass to 50 parts by mass, (B) is included in an amount in a range of about 10 parts by mass to about 80 parts by mass, for example, 10,11,12,13,14,15,16,17,18,19,20,21,22,23,24,25,26,27,28,29,30,31,32,33,34,35,36,37,38,39, 40,41,42,43,44,45,46,47,48,49,50,51,52,53,54,55,56,57,58,59,60,61,62,63,64,65,66,67,68,69, 70,71,72,73,74,75,76,77,78,79,80 parts by mass, 20 to 70 parts by mass, 30 parts by mass to 70 parts by mass, or 30 parts by mass to 60 parts by mass, and (C) is included in an amount in a range of about 1 part by mass to about 30 parts by mass, for example, 1,2,3,4,5,6,7,8,9,10,11,12,13,14,15,16,17,18,19,20,21,22,23,24,25,26,27,28,29,30 parts by mass, 5 parts by mass to 30 parts by mass or 5 parts by mass to 20 parts by mass.

The core-shell binder in the coating layer may be included in an amount in a range of about 0.01 wt% to about 30 wt%, for example about 5 wt% to about 30 wt%, for example, 8 wt% to 25 wt%, 8 wt% to 20 wt%, or 10 wt% to 20 wt%, referring to the total weight of the coating layer. The effect of the separator may be readily implemented in the above range.

### Linear binder:

The coating layer includes the linear binder. The linear binder may significantly increase adhesion to each of a positive electrode and a negative electrode through an interaction with the core-shell binder, and may increase adhesion between the porous substrate, the heat-resistant layer, and the adhesive layer.

The linear binder may be or include an aqueous adhesive binder.

The linear binder has a functional group at a terminal thereof.

The functional group may be or include an adhesive functional group.

A terminal functional group of the linear binder may be the same as a terminal functional group of the shell of the core-shell binder.

The terminal functional group is substantially the same as the terminal functional group described in the core-shell binder.

According to one example embodiment, the terminal functional group may be or include a combination of one or more of a -COOH group, an -OH group, an -NH₂ group, a - C(=O)H group, a -C(=O)NH₂ group, and a -SS- group. A functional group having the -SS-group is the same as the functional group described in Chemical Formula 6 above.

The linear binder may have a weight average molecular weight in a range of about 500 g/mol to about 50,000 g/mol, for example, 500, 1000, 1500, 2000, 2500, 3000, 3500, 4000, 4500, 5000, 5500, 6000, 6500, 7000, 7500, 8000, 8500, 9000, 10000, 20000, 30000, 40000, 50000 g/mol, 1,000 g/mol to 5,000 g/mol. In the above range, it may be possible to fill the empty space between the fillers or to fill a space between the core-shell binders.

When the linear binder has the terminal functional group, there is no particular limitation on a structural unit included in a main chain of the binder.

According to one example embodiment, a main chain of the shell of the core-shell binder may be the same as, or different from, the main chain of the linear binder.

The main chain of the linear binder may be linear or branched.

In one example, the main chain of the linear binder may include at least one of *-O-*, *- BY¹-*, *-NY²-*, *-(C=O)-*, *-C=N, *-S-*, and *-(O=S=O)-*, or a combination thereof. Here, Y¹ and Y² may each independently be hydrogen or a substituted or unsubstituted C₁-C₁₀ alkyl group.

In one example, the main chain of the linear binder may have at least one of the alkylene glycol group-containing structural unit, the cyano group-containing structural unit, and the structural unit derived from the (meth)acrylate or the (meth)acrylic acid.

For example, the main chain of the linear binder may have the alkylene glycol group-containing structural unit. The alkylene glycol group-containing structural unit is the same as the structural unit described in Chemical Formula 1 and Chemical Formulas 1-1 to 1-3 above.

In the linear binder, a functional group having the -SS- group may be connected directly to the alkylene glycol group-containing structural unit.

In the linear binder, the functional group having the -SS- group may be bonded to the alkylene glycol group-containing structural unit through a linker.

For example, the linker may be or include a functional group having at least one of carbon, oxygen, nitrogen, and sulfur in a main chain.

The linker may be substantially the same as the linker described in Formulas 7-1 to 7-12 above.

For a method of bonding the linker to the alkylene glycol group-containing structural unit, reference may be made to Reaction Schemes 1 to 11 above.

In one example, the linear binder may have one of structures represented by the following chemical formulas:

Chemical Formula I: R¹¹-S-S-Y¹-X-Y²-S-S-R¹¹.

In Chemical Formula I above, X is or includes one of the units of Chemical Formula 1 above or a combination thereof, Y¹ and Y² are or include each one of Chemical Formulas 7-1 to 7-12 above or a combination thereof, and R¹¹ is or includes a substituted or unsubstituted C₁-C₁₀ alkyl group or a substituted or unsubstituted C₆-C₁₀ aryl group), and

Chemical Formula II: Y³-X-Y¹-S-S-R¹¹.

In Formula II above, X is one of the units of Chemical Formula 1 above or a combination thereof, Y¹ is or includes one of Chemical Formulas 7-1 to 7-12 above or a combination thereof, Y³ is hydrogen, a hydroxyl group, a substituted or unsubstituted C₁-C₁₀ alkyl group, a substituted or unsubstituted C₁-C₁₀ alkoxy group, or a substituted or unsubstituted C₆-C₁₀ aryl group, and R¹¹ is or includes a substituted or unsubstituted C₁-C₁₀ alkyl group or a substituted or unsubstituted C₆-C₁₀ aryl group).

In one example, R¹¹ may be or include a C₁-C₅ alkyl group substituted with an amine group or a C₆-C₁₀ aryl group substituted with an amine group.

In one example, the -S-S-R¹¹ may be or include *-S-S-CH₂CH₂-NH₂ or *-S-S-C₆H₅-NH₂.

The coating layer may further include an adhesive binder in addition to the core-shell binder and the linear binder. For example, the adhesive binder may include an acrylate-based compound or a derivative thereof, a diallyl phthalate-based compound or a derivative thereof, a polyimide-based compound or a derivative thereof, or a polyurethane-based compound or a derivative thereof. For example, the adhesive binder may be crosslinked polymethyl methacrylate.

The coating layer may further include a binder in addition to the core-shell binder.

The binder may be or include a heat-resistant binder or a heat-resistant adhesive binder.

The binder may be or include a non-core-shell binder rather than a core-shell binder.

The heat-resistant binder may include a (meth)acrylic binder including a sulfonate group-containing structural unit. The (meth)acrylic binder may further include at least one of a structural unit derived from (meth)acrylate or (meth)acrylic acid, a cyano group-containing structural unit, and a structural unit derived from (meth)acrylamide.

The heat-resistant binder in the coating layer may be included in an amount in a range of about 1 wt% to about 25 wt%, for example, 1 wt% to 20 wt%, 1 wt% to 15 wt%, or 2 wt% to 15 wt%, referring to the total weight of the coating layer.

The coating layer may further include the filler.

The filler may have an average particle diameter D50 of about 0.4 µm or less, for example, 0.35 µm or less, 0.3 µm or less, or in a range of about 0.1 µm to about 0.3 µm. In the above range, there may be an effect of improving heat resistance properties.

A surface of the filler may or may not be modified.

The filler may be or include, for example, an inorganic filler, an organic filler, an organic-inorganic composite filler, or a combination thereof. The inorganic filler may include a ceramic material capable of improving heat resistance. The inorganic filler may include, for example, at least one of a metal oxide, a metalloid oxide, a metal fluoride, a metal hydroxide, or a combination thereof. The inorganic filler may include, for example, at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but the present disclosure is not limited thereto. The organic filler may include an acrylic compound, an imide compound, an amide compound, or a combination thereof, but the present disclosure is not limited thereto. The organic filler may have a core-shell structure, but the present disclosure is not limited thereto. For example, the filler may include boehmite.

The filler may have a spherical, plate-like, cubic, or amorphous shape. For example, the filler may have a cubic shape, and the cubic shape may have a significantly lower shrinkage rate as described above.

The filler may be included in an appropriate or desired amount with respect to the heat-resistant binder. According to one example embodiment, the heat-resistant binder and the filler may be included in a mass ratio in a range of about 1:10 to about 1:50, for example, a mass ratio of 1:20 to 1:30. In the above range, there may be an effect of improving heat resistance properties in an electrolyte.

The filler in the coating layer may be included in an amount in a range of about 50 wt% to about 99 wt%, for example, 70 wt% to 99 wt%, 75 wt% to 99 wt%, 80 wt% to 99 wt%, 85 wt% to 99 wt%, 90 wt% to 99 wt%, or 95 wt% to 99 wt%, referring to the total weight of the coating layer. When the filler is included within the above range, desired or improved heat resistance, durability, oxidation resistance, and stability can be exhibited.

According to one example embodiment, the coating layer may be or include a single layer including the core-shell binder, the linear binder, the heat-resistant binder, and the filler. The coating layer may be formed of or include a composition including the core-shell binder, the linear binder, the heat-resistant binder, and the filler.

The coating layers may each have a thickness in the range of about 0.01 µm to about 20 µm, and may have a thickness of 1 µm to 10 µm, or 1 µm to 5 µm, or 1 µm to 3 µm within the above range.

According to another example embodiment, the coating layer may include a heat-resistant layer including the heat-resistant binder and the filler, and an adhesive layer located on the heat-resistant layer and including the core-shell binder and the linear binder. The heat-resistant layer may be formed of or include a composition including the heat-resistant binder and the filler without the core-shell binder and the linear binder.

In the adhesive layer, the core-shell binder and the linear binder may be included in a weight ratio in a range of about 2:1 to about 20:1, for example, 2:1, 3:1, 4:1, 5:1, 6:1, 7:1, 8:1, 9:1, 10:1, 11:1, 12:1, 13:1, 14:1, 15:1, 16:1, 17:1, 18:1, 19:1 or 20:1, 5:1 to 15:1. In the above range, an effect of improving adhesion to each of a positive electrode and a negative electrode can be desired or improved.

The heat-resistant layers may each have a thickness in the range of about 0.01 µm to about 20 µm and may have a thickness in a range of about 1 µm to about 10 µm, or 1 µm to 5 µm, or 1 µm to 3 µm within the above range.

The adhesive layers may each have a thickness in the range of about 0.01 µm to about 20 µm, and may have a thickness of 0.1 µm to 10 µm, 0.1 µm to 5 µm, or 0.2 µm to 1 µm within the above range.

The coating layer is located on at least one surface of the porous substrate.

A ratio of the thickness of the coating layer to the thickness of the porous substrate may be in the range of about 0.05 to about 0.5, for example, 0.05 to 0.4, or 0.05 to 0.3, or 0.1 to 0.2. In the above range, the separator can exhibit desired or improved air permeability, heat resistance, and adhesion. Here, the "thickness of the coating layer" is a thickness of one coating layer when the coating layer is formed on only one surface of the porous substrate, and is a total thickness of two coating layers when the coating layers are formed on both surfaces of the porous substrate.

### Porous substrate

The details of the porous substrate are substantially the same as the description thereof described in the separator for a first lithium rechargeable battery. Therefore, a detailed description of the porous substrate is omitted.

The separator for a lithium rechargeable battery may exhibit desired or improved air permeability, and may have an air permeability value of, for example, less than about 200 sec/100cc, or for example, 190 sec/100cc or less or 180 sec/100cc or less. That is, the separator may have an air permeability value of less than about 40 sec/100cc·per unit thickness of 1 µm, for example, 30 sec/100cc·or less per unit thickness of 1 µm or 25 sec/100cc·or less per unit thickness of 1 µm. Here, air permeability refers to the time (seconds) for 100 cc of air to pass through a unit thickness of the separator. Air permeability per unit thickness may be obtained by measuring air permeability for the entire thickness of the separator and dividing the measured air permeability by a thickness. The air permeability may be measured by measuring the time (seconds) for 100 cc of air to pass through the separator using a measuring device (EG01-55-1MR manufactured by Asahi Seiko).

The separator for a rechargeable battery may be formed by coating one surface, or both surfaces, of a porous substrate with a composition for forming a coating layer, drying the composition, and then curing the composition. The curing may be performed using a typical method known to those skilled in the art.

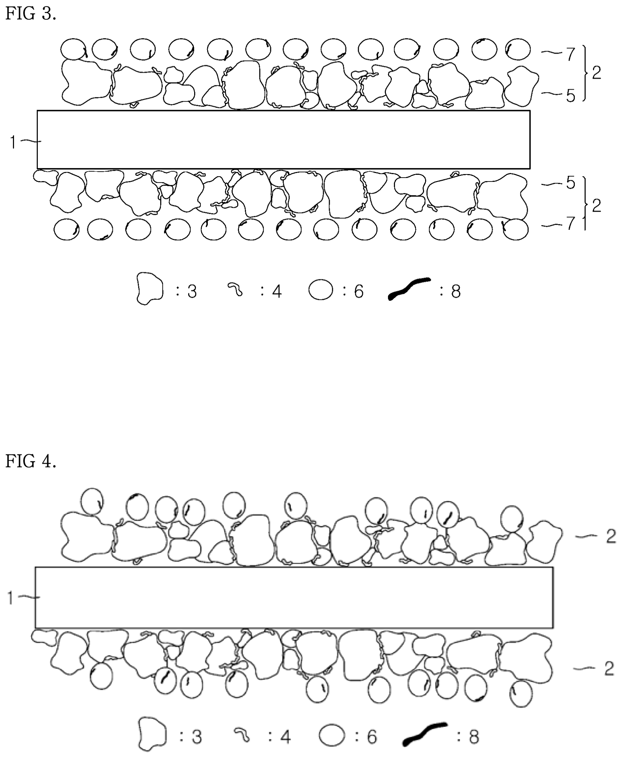

FIG. 3 is a cross-sectional view illustrating a separator for a lithium rechargeable battery according to one example embodiment. Referring to FIG. 3, the separator for a lithium rechargeable battery includes a porous substrate 1, a coating layer 2 which is a laminate of a heat-resistant layer 5 and an adhesive layer 7, located on each of the opposite surfaces of the porous substrate 1. The heat-resistant layer 5 may include a filler 3 and a heat-resistant binder 4. The adhesive layer 7 may be located on the heat-resistant layer 5 and may include a core-shell binder 6 and a linear binder 8.

FIG. 4 is a cross-sectional view illustrating a separator for a lithium rechargeable battery according to another example embodiment. Referring to FIG. 4, the separator for a lithium rechargeable battery includes a porous substrate 1 and coating layers 2 positioned on both surfaces of the porous substrate 1. The coating layer 2 may include a filler 3, a heat-resistant binder 4, a core-shell binder 6, and a linear binder 8.

### Separator for third lithium rechargeable battery

The separator for a lithium rechargeable battery includes a porous substrate, and a coating layer formed on at least one surface of the porous substrate. The coating layer includes a mixture of a core-shell binder and a linear binder, and a filler, the core-shell binder has a first adhesive functional group, and the linear binder has a second adhesive functional group.

The coating layer may include both of the core-shell binder having the first adhesive functional group, and the linear binder having the second adhesive functional group, thereby lowering the thermal shrinkage rate of the separator and increasing the adhesion thereof to each of a positive electrode and a negative electrode. This is considered to be because the core-shell binder and the linear binder each interact with the filler, but the present disclosure is not limited thereto. In particular, this is considered to be because a contact area between the linear binder and the filler increases due to the linear binder, in particular, the second adhesive functional group of the linear binder, but the present disclosure is not limited thereto.

The separator may have a thermal shrinkage rate of about 13% or less in a machined direction (MD) and a thermal shrinkage rate of about 5% or less in a transverse direction (TD). Here, an MD and a TD are the same directions as an MD and a TD of the porous substrate, respectively.

The adhesion of the separator to the positive electrode may be about 0.9 gf/mm or more, and the adhesion of the separator to the negative electrode may be about 0.7 gf/mm or more.

The first adhesive functional group of the core-shell binder and the second adhesive functional group of the linear binder may be the same. The same adhesive functional groups may interact with each other to increase the degree of bonding between the core-shell binder and the linear binder, thereby further increasing the adhesion of the separator to each of the positive electrode and the negative electrode.

### Core-shell binder

The coating layer includes the core-shell binder. The separator has low resistance, is capable of increasing a degree of dissociation of lithium ions and forming an ion transport channel, and has high adhesion to each of a positive electrode and a negative electrode. Therefore, the separator may increase the lifetime of a battery at room temperature and high temperature.

The core-shell binder may provide low resistance, a high degree of dissociation of lithium ions, a high-ion transport channel, and high adhesion to each of the positive electrode and the negative electrode.

In one example, the core-shell binder may be or include an aqueous adhesive binder. Therefore, the core-shell binder may be used in an aqueous solvent, for example, water, to provide an aqueous coating layer, thereby allowing an environmentally friendly separator to be manufactured.

In one example, the core-shell binder may be or include a particle-type binder.

In one example, an average particle diameter D50 of the core-shell binder may be about 700 nm or less, for example, 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410,420, 430, 440, 450, 460, 470, 480, 490, 500, 510, 520, 530, 540, 550, 560, 570, 580, 590, 600, 610, 620, 630, 640, 650, 660, 670, 680, 690, 700 nm, in the range of about 200 nm to about 700 nm, 300 nm to 700 nm, or 300 nm to 600 nm. In the above range, the core-shell binder can be readily manufactured, and the air permeability of the separator can be increased. The average particle diameter D50 may be adjusted by controlling a reaction temperature and a stirring speed of a core and/or a shell during the preparation of the core-shell binder, but the present disclosure is not limited thereto.

In the core-shell binder, the core may be included in an amount in a range of about 40 wt% to about 90 wt%, for example, 50 wt% to 70 wt%, and the shell may be included in an amount in a range of about 10 wt% to about 60 wt%, for example, 30 wt% to 50 wt%. In the above range, the mechanical strength of the core-shell binder may be high, thereby increasing the strength of the separator.

### Core

The core may be or include an organic core and may include a first copolymer.

The details of the core are substantially the same as the details of the core described in the core-shell binder of the separator for a first lithium rechargeable battery. Accordingly, a detailed description of the core is omitted.

### Shell

The shell surrounds a surface of the core and includes a second copolymer connected to the surface of the core.

The second copolymer has an alkylene glycol group-containing structural unit and a cyano group-containing structural unit and has the first adhesive functional group at one terminal thereof. The other terminal of the second copolymer may be bonded to the surface of the core. The alkylene glycol group-containing structural unit and the cyano group-containing structural unit may be present between the surface of the core and the first adhesive functional group.

The alkylene glycol group-containing structural unit may be or include a lithium ion-conductive unit and may form a lithium ion transport channel and reduce the resistance of the separator, thereby improving the lifetime of a battery at room temperature and high temperature.

The cyano group-containing structural unit may be or include a lithium ion conductive unit and may form a lithium ion transport channel and reduce the resistance of the separator, thereby improving the lifetime of a battery at room temperature and high temperature.

According to one example embodiment, the second copolymer may have the alkylene glycol group-containing structural unit and the cyano group-containing structural unit in a main chain of the second copolymer.

The alkylene glycol group-containing structural unit may be represented by Chemical Formula 1 above, and the second copolymer may include one or more units of Chemical Formula 1 above.

Chemical Formula 1 above may be or include a combination of one or more of Chemical Formulas 1-1, 1-2, and 1-3 above.

The alkylene glycol group-containing structural unit may be derived from at least one of ethylene glycol, n-propylene glycol, and propylene glycol carbonate. That is, the second copolymer may include a unit derived from at least one of PEG, polypropylene glycol, and polypropylene glycol carbonate.

The alkylene glycol group-containing structural unit may be included in an amount in a range of about 15 mol% to about 85 mol%, 15 mol% to 75 mol%, 25 mol% to 85 mol%, 25 mol% to 70 mol%, 30 mol% to 75 mol%, or 30 mol% to 70 mol% with respect to 100 mol% of repeating units of the second copolymer. In the above range, the separator may secure desired or improved oxidation resistance and may exhibit adhesion, heat resistance, and air permeability.

The cyano group-containing structural unit may be represented by Chemical Formula 2 above, and the second copolymer may include one or more units of Chemical Formula 2 above:
The cyano group-containing structural unit may be or include a structural unit derived from, for example, (meth)acrylonitrile, alkene nitrile, cyanoalkyl (meth)acrylate, or 2-(vinyloxy)alkane nitrile. Here, the alkene may be or include a C₁-C₂₀ alkene, a C₁-C₁₀ alkene, or a C₁-C₆ alkene, and the alkyl may be or include a C₁-C₂₀ alkyl, a C₁-C₁₀ alkyl, or a C₁-C₆ alkyl. In addition, the alkane may be or include a C₁-C₂₀ alkane, a C₁-C₁₀ alkane, or a C₁-C₆ alkane.

The alkene nitrile may be or include, for example, allyl cyanide, 4-pentene nitrile, 3-pentene nitrile, 2-pentene nitrile, or 5-hexene nitrile. The cyanoalkyl (meth)acrylate may be or include, for example, at least one of cyanomethyl (meth)acrylate, cyanoethyl (meth)acrylate, cyanopropyl (meth)acrylate, or cyanooctyl (meth)acrylate. The 2-(vinyloxy)alkane nitrile may be or include, for example, 2-(vinyloxy)ethane nitrile or 2-(vinyloxy)propane nitrile.

The cyano group-containing structural unit may be included in an amount in a range of about 15 mol% to about 80 mol%, for example, 15 mol% to 70 mol%, 25 mol% to 80 mol%, 25 mol% to 65 mol%, 30 mol% to 70 mol%, or 30 mol% to 65 mol%, with respect to 100 mol% of the repeating units of the second copolymer. In the above range, the separator may secure desired or improved oxidation resistance and may exhibit adhesion, heat resistance, and air permeability.

According to one example embodiment, with respect to 100 mol% of the repeating units of the second copolymer, the total of the alkylene glycol group-containing structural unit and the cyano group-containing structural unit may be included in an amount of about 95 mol% or more, for example, in a range of about 95 mol% to about 100 mol%, or 100 mol%. The effect of the above-described separator may be readily implemented in the above range.

The second copolymer may further include a structural unit derived from (meth)acrylic acid or (meth)acrylate. The second copolymer may include the structural unit derived from the (meth)acrylic acid or the (meth)acrylate in the main chain of the second copolymer. For example, the second copolymer may include the structural unit derived from the (meth)acrylic acid.

The structural unit derived from the (meth)acrylic acid or the (meth)acrylate may include a lithium cation in a unit structure, and thus may provide a lithium cation through a dissociation process of the lithium cation. Thus, the separator may provide an effect of increasing a concentration of lithium cations and reducing resistance. In addition, the separator may have a carboxyl functional group to further increase adhesion. In addition, the separator may further increase adhesion to ensure high attachment to an electrode and may provide desired or improved heat resistance, air permeability, and oxidation resistance. In addition, the dispersibility in a composition for the coating layer including the core-shell binder may be increased.

In the structural unit derived from the (meth)acrylate or the (meth)acrylic acid, the (meth)acrylate may be or include a conjugate base of (meth)acrylic acid, a (meth)acrylic acid salt, or a derivative thereof. The structural unit derived from the (meth)acrylate or the (meth)acrylic acid may be represented by, for example, Chemical Formula 3, 4, or 5 above, or a combination thereof:
The structural unit derived from the (meth)acrylate or the (meth)acrylic acid in the repeating units of the second copolymer may be included in an amount in a range of about 0.1 mol% to about 30 mol%, 0.1 mol% to 25 mol%, 1 mol% to 25 mol%, 1 mol% to 20 mol%, or 5 mol% to 20 mol%. In the above range, the separator may exhibit desired or improved adhesion, heat resistance, air permeability, and oxidation resistance.

As an example, the structural unit derived from the (meth)acrylate or the (meth)acrylic acid may include a structural unit represented by Chemical Formula 4 above and a structural unit represented by Chemical Formula 5 above, and in this case, the structural unit represented by Chemical Formula 4 above and the structural unit represented by Chemical Formula 5 above may be included in a molar ratio in a range of about 10:1 to about 1:2, or 10:1 to 1:1, or 5:1 to 1:1.

According to one example embodiment, with respect to 100 mol% of the repeating units of the second copolymer, the total of the alkylene glycol group-containing structural unit, the cyano group-containing structural unit, and the structural unit derived from the (meth)acrylate or the (meth)acrylic acid may be included in an amount of about 95 mol% or more, for example, in a range of about 95 mol% to about 100 mol% or 100 mol%. The effect of the above-described separator may be readily implemented in the above range.

The second copolymer may be provided as various forms such as an alternating polymer in which the structural units are alternately distributed, a random polymer in which the structural units are randomly distributed, or a graft polymer in which some of the structural units are grafted.

The shell has the first adhesive functional group at one terminal thereof.

The first adhesive functional group may be bonded to the alkylene glycol group-containing structural unit, the cyano group-containing structural unit, or the structural unit derived from the (meth)acrylate or the (meth)acrylic acid. In one example, the first adhesive functional group may be bonded to the alkylene glycol group-containing structural unit.

The first adhesive functional group may be capable of forming a chemical bond or a physical bond. For example, the first adhesive functional group may undergo hydrogen bond or covalent bond reforming.

The first adhesive functional group may include oxygen, nitrogen, or sulfur with high electronegativity, and may be or include, for example, a combination of one or more of functional groups having a -COOH group, an -OH group, an -NH₂ group, a -C(=O)H group, a -C(=O)NH₂ group, and a -SS- group.

The first adhesive functional group may undergo metathesis and may include, for example, a -SS- group. For example, the functional group including the -SS- group may be represented by Chemical Formula 6 above.

R¹¹ may be or include a C₁-C₅ alkyl group substituted with an amine group or a C₆-C₁₀ aryl group substituted with an amine group.

The functional group including the -SS- group may be or include *-S-S-CH₂CH₂-NH₂ or *-S-S-C₆H₅-NH₂.

The first adhesive functional group may be bonded directly to the alkylene glycol group-containing structural unit, the cyano group-containing structural unit, or the structural unit derived from the (meth)acrylate or the (meth)acrylic acid.

In another example, the first adhesive functional group may be bonded to the alkylene glycol group-containing structural unit, the cyano group-containing structural unit, or the structural unit derived from the (meth)acrylate or the (meth)acrylic acid through a linker.

The linker may be or include a functional group having at least one of carbon, oxygen, nitrogen, and sulfur in a main chain.

The linker may be represented by Chemical Formulas 7-1 to 7-12 above.

The linker may be bonded to the alkylene glycol group-containing structural unit.

The linker may be bonded to the alkylene glycol group-containing structural unit through a typical method known to those skilled in the art. For example, reference may be made to the schemes of Reaction Schemes 1 to 11 above.

The second copolymer may be prepared by polymerizing a monomer providing a cyano group-containing structural unit (for example, a monomer providing a unit of Chemical Formula 2 above) and a monomer providing an alkylene glycol group-containing structural unit (for example, a monomer providing a unit of Chemical Formula 1 above) and then introducing the first adhesive functional group at a terminal thereof.

The second copolymer may be or include a copolymer of a monomer mixture including (A) a prepolymer of an alkylene glycol group-containing structural unit having the first adhesive functional group at a terminal thereof and (B) a monomer providing a cyano group-containing structural unit. In this case, a mass ratio may be set such that, in a total of 100 parts by mass of (A) and (B), (A) is included in an amount in a range of about 10 parts by mass to about 90 parts by mass, for example, 10,11,12,13,14,15,16,17,18,19,20,21,22,23,24,25,26,27,28,29,30,31,32,33,34,35,36,37,38,39, 40,41,42,43,44,45,46,47,48,49,50,51,52,53,54,55,56,57,58,59,60,61,62,63,64,65,66,67,68,69, 70,71,72,73,74,75,76,77,78,79,80,81,82,83,84,85,86,87,88,89,90 parts by mass, 20 parts by mass to 80 parts by mass, 30 parts by mass to 70 parts by mass, or 30 parts by mass to 50 parts by mass, and (B) is included in an amount in a range of about 10 parts by mass to about 90 parts by mass, for example, 10,11,12,13,14,15,16,17,18,19,20,21,22,23,24,25,26,27,28,29,30,31,32,33,34,35,36,37,38,39, 40,41,42,43,44,45,46,47,48,49,50,51,52,53,54,55,56,57,58,59,60,61,62,63,64,65,66,67,68,69, 70,71,72,73,74,75,76,77,78,79,80,81,82,83,84,85,86,87,88,89,90 parts by mass, 20 parts by mass to 80 parts by mass, 30 parts by mass to 70 parts by mass, or 50 parts by mass to 70 parts by mass.

The second copolymer may be or include a copolymer of a monomer mixture including (A) a prepolymer of an alkylene glycol group-containing structural unit having the first adhesive functional group at a terminal thereof, (B) a monomer providing a cyano group-containing structural unit, and (C) (meth)acrylate or (meth)acrylic acid. In this case, a mass ratio may be set such that, in a total of 100 parts by mass of (A), (B) and (C), (A) is included in an amount in a range of about 10 parts by mass to about 80 parts by mass, for example, 10,11,12,13,14,15,16,17,18,19,20,21,22,23,24,25,26,27,28,29,30,31,32,33,34,35,36,37,38,39, 40,41,42,43,44,45,46,47,48,49,50,51,52,53,54,55,56,57,58,59,60,61,62,63,64,65,66,67,68,69, 70,71,72,73,74,75,76,77,78,79,80 parts by mass, 20 parts by mass to 70 parts by mass, 20 parts by mass to 60 parts by mass, or 20 parts by mass to 50 parts by mass, (B) is included in an amount in a range of about 10 parts by mass to about 80 parts by mass, for example, 10,11,12,13,14,15,16,17,18,19,20,21,22,23,24,25,26,27,28,29,30,31,32,33,34,35,36,37,38,39, 40,41,42,43,44,45,46,47,48,49,50,51,52,53,54,55,56,57,58,59,60,61,62,63,64,65,66,67,68,69, 70,71,72,73,74,75,76,77,78,79,80 parts by mass, 20 to 70 parts by mass, 30 parts by mass to 70 parts by mass, or 30 parts by mass to 60 parts by mass, and (C) is included in an amount in a range of about 1 part by mass to about 30 parts by mass, for example, 1,2,3,4,5,6,7,8,9,10,11,12,13,14,15,16,17,18,19,20,21,22,23,24,25,26,27,28,29,30 parts by mass, 5 parts by mass to 30 parts by mass or 5 parts by mass to 20 parts by mass.

The core-shell binder in the coating layer may be included in an amount in a range of about 0.01 wt% to about 30 wt%, for example 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27 ,28, 29, 30 wt%, about 5 wt% to about 30 wt%, for example, 8 wt% to 25 wt%, 8 wt% to 20 wt%, or 10 wt% to 20 wt%, referring to the total weight of the coating layer. The effect of the separator may be readily implemented in the above range.

### Linear binder

The coating layer includes the linear binder. The linear binder may interact with the filler to reduce the thermal shrinkage rate of the separator. In addition, the linear binder may interact with the core-shell binder to significantly increase adhesion to each of a positive electrode and a negative electrode.

The linear binder may be or include an aqueous binder. Therefore, the linear binder can increase the eco-friendliness of the separator by allowing a coating layer to be manufactured using an aqueous solvent.

The linear binder may have the second adhesive functional group and may be or include an aqueous adhesive binder.

The second adhesive functional group may be or include a combination of one or more of functional groups having a -COOH group, an -OH group, an -NH₂ group, a -C(=O)H group, a -C(=O)NH₂ group, and a -SS- group. The functional group having the -SS- group is the same as the functional group described in Chemical Formula 6 above.

In one example, the second adhesive functional group of the linear binder may be the same as the first adhesive functional group of the shell of the core-shell binder.

The linear binder may have a weight average molecular weight in a range of about 500 g/mol to about 50,000 g/mol, for example, 500, 1000, 1500, 2000, 2500, 3000, 3500, 4000, 4500, 5000, 5500, 6000, 6500, 7000, 7500, 8000, 8500, 9000, 10000, 20000, 30000, 40000, 50000 g/mol, 1,000 g/mol to 5,000 g/mol. In the above range, it may be possible to fill an empty space between the fillers or to fill a space between the core-shell binders. The weight average molecular weight may be obtained as a polystyrene-equivalent value by, e.g., gel permeation chromatography.

When the linear binder has the second adhesive functional group, there is no particular limitation on a structural unit included in a main chain of the linear binder.

According to one example embodiment, the main chain of the linear binder may be the same as or different from a main chain of the shell of the core-shell binder.

The main chain of the linear binder may be linear or branched.

In one example, the main chain of the linear binder may include at least one of *-O-*, *-BY¹-*, *- NY²-*, *-(C=O)-*, *-C≡N, *-S-*, and *-(O=S=O)-*, or a combination thereof. Here, Y¹ and Y² may each independently be hydrogen or a substituted or unsubstituted C₁-C₁₀ alkyl group.

In one example, the main chain of the linear binder may have at least one of the alkylene glycol group-containing structural unit, the cyano group-containing structural unit, and the structural unit derived from the (meth)acrylate or the (meth)acrylic acid.

For example, the main chain of the linear binder may have the alkylene glycol group-containing structural unit. The alkylene glycol group-containing structural unit is the same as the structural unit described in Chemical Formula 1 and Chemical Formulas 1-1 to 1-3 above.

In the linear binder, the functional group having the -SS- group may be connected directly to the alkylene glycol group-containing structural unit.

In the linear binder, the functional group having the -SS- group may be bonded to the alkylene glycol group-containing structural unit through a linker.

For example, the linker may be or include a functional group having at least one of carbon, oxygen, nitrogen, and sulfur in a main chain.

The linker may be substantially the same as the linker described in Formulas 7-1 to 7-12 above.

For a method of bonding the linker to the alkylene glycol group-containing structural unit, reference may be made to Reaction Formulas 1 to 11 above.

In one example, the linear binder may have a structure of Chemical Formula I above or Chemical Formula II above.

In one example, R¹¹ may be or include a C₁-C₅ alkyl group substituted with an amine group or a C₆-C₁₀ aryl group substituted with an amine group.

In one example, the -S-S-R¹¹ may be *-S-S-CH₂CH₂-NH₂ or *-S-S-C₆H₅-NH₂.

The linear binder in the coating layer may be included in an amount in a range of about 0.01 wt% to about 30 wt%, for example 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27 ,28, 29, 30 wt%, about 5 wt% to about 30 wt%, 8 wt% to 25 wt%, 8 wt% to 20 wt%, or 10 wt% to 20 wt%, referring to the total weight of the coating layer. The effect of the separator may be readily implemented in the above range.

In one example, the core-shell binder and the linear binder in the coating layer may be included in a weight ratio in a range of about 3:1 to about 15:1, for example, 3:1, 4:1, 5:1, 6:1, 7:1, 8:1, 9:1, 10:1, 11:1, 12:1, 13:1, 14:1, 15:1, 3:1 to 12:1. The effect of the separator may be readily implemented in the above range.

### Adhesive binder

The coating layer may further include an adhesive binder in addition to the core-shell binder and the linear binder. For example, the adhesive binder may include at least one of an acrylate-based compound or a derivative thereof, a diallyl phthalate-based compound or a derivative thereof, a polyimide-based compound or a derivative thereof, or a polyurethane-based compound or a derivative thereof. For example, the adhesive binder may be crosslinked polymethyl methacrylate.

### Heat-resistant binder

The coating layer may further include a heat-resistant binder in addition to the core-shell binder and the linear binder. The heat-resistant binder may further reduce a thermal shrinkage rate of the separator.

The heat-resistant binder may be or include a non-core-shell binder rather than a core-shell binder.

The heat-resistant binder may include a (meth)acrylic binder including a sulfonate group-containing structural unit. The (meth)acrylic binder may further include at least one of a structural unit derived from (meth)acrylate or (meth)acrylic acid, a cyano group-containing structural unit, and a structural unit derived from (meth)acrylamide.

The heat-resistant binder in the coating layer may be included in an amount in a range of about 2 wt% to about 15 wt%, for example, 2, 3, 4, 5, 6, 7, 8, 9, 10, 11, 12, 13, 14, 15 wt%, 2 wt% to 8 wt% or 4 wt% to 6 wt%, referring to the total weight of the coating layer. In the above range, the thermal shrinkage rate of the separator can be reduced without affecting the adhesion of the separator to a positive electrode and a negative electrode.

In one example, the total of the core-shell binder and the linear binder may be in an amount in a range of about 2 parts by weight to about 30 parts by weight, for example, 2, 3, 4, 5, 6, 7, 8, 9, 10, 11, 12, 13, 14, 15, 16, 17, 18, 19, 20, 21, 22, 23, 24, 25, 26, 27, 28, 29, 30 parts by weight, 2 to 20 parts by weight, or 5 to 15 parts by weight, with respect to 100 parts by weight of the heat-resistant binder. The effect of the separator may be readily implemented in the above range.

### Filler

The filler may interact with the linear binder and the core-shell binder to reduce the thermal shrinkage rate of the separator.

The filler may have a hydroxyl group on a surface thereof. The hydroxyl group may enhance an interaction between the filler and the linear binder and core-shell binder.

The hydroxyl group may be formed in the filler itself (former) or may be introduced into the filler through additional post-treatment such as surface modification (latter). For example, in the former case, the manufacturability of the separator can be improved.

The filler may have a particle diameter D100 of about 700 nm or less. In the above range, the filler may be readily included in the coating layer including the core-shell binder to increase the effect of the separator. For example, the particle diameter D100 may be in the range of about 0.3 nm to about 0.6 nm.

The filler may have an average particle diameter D50 of about 400 nm or less, for example, 350 nm or less, 300 nm or less, or in a range of about 100 nm to about 300 nm. In the above range, since the filler has a particle diameter in an appropriate or desired range as compared to the core-shell binder, thermal stability may increase, and the interaction with the linear binder may also increase due to an increase in surface area, thereby further increasing heat resistance.

The filler may be or include, for example, an inorganic filler, an organic filler, an organic-inorganic composite filler, or a combination thereof. The inorganic filler may include a ceramic material capable of improving heat resistance. The inorganic filler may include, for example, at least one of a metal oxide, a metalloid oxide, a metal fluoride, a metal hydroxide, or a combination thereof. The inorganic filler may include, for example, at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but the present disclosure is not limited thereto. The organic filler may include an acrylic compound, an imide compound, an amide compound, or a combination thereof, but the present disclosure is not limited thereto. The organic filler may have a core-shell structure, but the present disclosure is not limited thereto.

For example, the filler may be boehmite. Since the boehmite has a hydroxyl group such as γ-AlOOH on an outermost surface thereof, the interaction with the linear binder is possible, and a separate hydroxyl group introduction process is not required, thereby improving a manufacturing process of the separator.

The filler may have a spherical, plate-like, cubic, or amorphous shape. For example, the filler may have a cubic shape, and the cubic shape may have a significantly lower thermal shrinkage rate as described above.

The filler may be included in an appropriate or desired amount with respect to the linear binder.

According to one example embodiment, the linear binder and the filler may be included in a mass ratio in a range of about 1:2000 to about 1:100, for example, 1:2000, 1:1900, 1:1800, 1:1700, 1:1600, 1:1500, 1:1400, 1:1300, 1:1200, 1:1100, 1:1000, 1:900, 1:800, 1:700, 1:600, 1:500, 1:400, 1:300, 1:200, 1:100, a mass ratio of 1:1000 to 1:200. In the above range, it is possible to facilitate improvement in the thermal shrinkage rate of the separator and reduce or prevent a decrease in adhesion of the separator.

The filler may be included in an appropriate or desired amount with respect to the core-shell binder. According to one example embodiment, the core-shell binder and the filler may be included in a mass ratio in a range of about 1:1,000 to about 1:50, for example, 1:1000, 1:950, 1:900, 1:850, 1:800, 1:750, 1:700, 1:650, 1:600, 1:550, 1:500, 1:450, 1:400, 1:350, 1:300, 1:250, 1:200, 1:150, 1:100, 1:50, a mass ratio of 1:500 to 1:100. In the above range, it is possible to facilitate improvement in thermal shrinkage rate of the separator and also reduce or prevent an increase in air permeability of the separator.

In one example, the filler may be included in an appropriate or desired amount with respect to the total of the heat-resistant binder, the core-shell binder, and the linear binder. A weight ratio of the filler to the total of the heat-resistant binder, the core-shell binder, and the linear binder may be in the range of about 10:1 to about 50:1, for example, 10:1, 11:1, 12:1, 13:1, 14:1, 15:1, 16:1, 17:1, 18:1, 19:1, 20:1, 21:1, 22:1, 23:1, 24:1, 25:1, 26:1, 27:1, 28:1, 29:1, 30:1, 31:1, 32:1, 33:1, 34:1, 35:1, 36:1, 37:1, 38:1, 39:1, 40:1, 41:1, 42:1, 43:1, 44:1, 45:1, 46:1, 47:1, 48:1, 49:1, 50:1, 10:1 to 40:1 or 10:1 to 30:1. In the above range, it is possible to facilitate improvement in thermal shrinkage rate of the separator and also reduce or prevent an increase in air permeability of the separator.

The filler in the coating layer may be included in an amount in a range of about 50 wt% to about 99 wt%, for example, 70 wt% to 99 wt%, 75 wt% to 99 wt%, 80 wt% to 99 wt%, 85 wt% to 99 wt%, 90 wt% to 99 wt%, or 95 wt% to 99 wt%, referring to the total weight of the coating layer. When the filler is included within the above range, desired or improved heat resistance, durability, oxidation resistance, and stability can be exhibited.

The coating layer may be or include a single layer formed of or including a composition for a coating layer, including the core-shell binder, the linear binder, and the filler.

The above coating layer may be or include a single layer formed of or including a composition for a coating layer including the core-shell binder, the linear binder, the filler, and the heat-resistant binder.

The coating layers may each have a thickness in the range of about 0.01 µm to about 20 µm and may have a thickness in a range of about 1 µm to about 10 µm, or 1 µm to 5 µm, or 1 µm to 3 µm within the above range.

The coating layer is located on at least one surface of the porous substrate.

A ratio of the thickness of the coating layer to the thickness of the porous substrate may be in the range of about 0.05 to about 0.5, for example, 0.05 to 0.4, or 0.05 to 0.3, or 0.1 to 0.2. In the above range, the separator can exhibit desired or improved air permeability, heat resistance, and adhesion. Here, the "thickness of the coating layer" is a thickness of one coating layer when the coating layer is formed on only one surface of the porous substrate, and is a total thickness of two coating layers when the coating layers are formed on both surfaces of the porous substrate.

### Porous substrate

The details of the porous substrate are substantially the same as the details described in the separator for a first lithium rechargeable battery. Therefore, a detailed description of the porous substrate is omitted.

The separator for a lithium rechargeable battery may exhibit desired or improved air permeability and may have an air permeability value of, for example, less than about 200 sec/100cc, or for example, 190 sec/100cc or less or 180 sec/100cc or less. That is, the separator may have an air permeability value of less than about 40 sec/100cc·per unit thickness of 1 µm, for example, 30 sec/100cc·or less per unit thickness of 1 µm or 25 sec/100cc·or less per unit thickness of 1 µm. Here, air permeability refers to the time (seconds) for 100 cc of air to pass through a unit thickness of the separator. Air permeability per unit thickness may be obtained by measuring air permeability for the entire thickness of the separator and dividing the measured air permeability by a thickness. The air permeability may be measured by measuring the time (seconds) for 100 cc of air to pass through the separator using a measuring device (EG01-55-1MR manufactured by Asahi Seiko).

The separator for a rechargeable battery according to one example embodiment may be formed by coating one surface or both surfaces of a porous substrate with a composition for forming a coating layer, drying the composition, and then curing the composition. The curing may be performed using a typical method known to those skilled in the art.

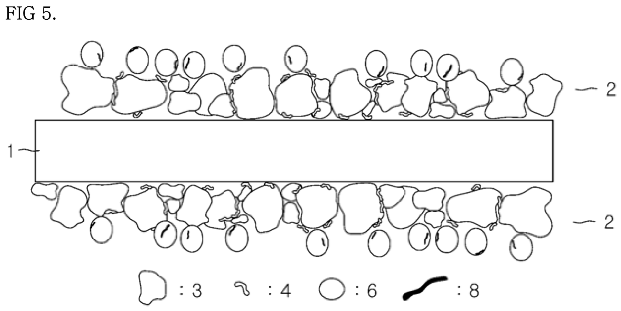

FIG. 5 is a cross-sectional view illustrating a separator for a lithium rechargeable battery according to one example embodiment.

Referring to FIG. 5, the separator for a lithium rechargeable battery includes a porous substrate 1 and coating layers 2 positioned on both surfaces of the porous substrate 1. The coating layer 2 may include a filler 3, a heat-resistant binder 4, a linear binder 8, and a core-shell binder 6.

### Rechargeable lithium battery

According to one example embodiment, the rechargeable lithium battery includes the separator for a rechargeable lithium battery; a positive electrode; and a negative electrode.

The separator for rechargeable lithium battery refers to the description described above. The separator for rechargeable lithium battery may be positioned between the positive electrode and the negative electrode.

### Positive electrode

A positive electrode for a rechargeable lithium battery may include a current collector, and a positive electrode active material layer on the current collector. The positive electrode active material layer may include a positive electrode active material, and may further include a binder and/or a conductive material. For example, the positive electrode may further include an additive that can constitute a sacrificial positive electrode.

### Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free lithium nickel-manganese-based oxide, or a combination thereof.

As an example, the following compounds represented by any one of the following Chemical Formulas may be used. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

An amount of the positive electrode active material may be in a range of about 90 wt% to about 99.5 wt% based on 100 wt% of the positive electrode active material layer. Amounts of each of the binder and the conductive material may independently be in a range of about 0.5 wt% to about 5 wt%, respectively, based on 100 wt% of the positive electrode active material layer.

The binder attaches the positive electrode active material particles to each other, and attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause a chemical change (e.g., does not cause an undesirable chemical change in the rechargeable lithium battery) and that conducts electrons can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector, but the current collector is not limited thereto.

### Negative electrode

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include a range of about 90 wt% to about 99 wt% of the negative electrode active material, a range of about 0.5 wt% to about 5 wt% of the binder, and a range of about 0 wt% to about 5 wt% of the conductive material.

### Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOx (0 < x < 2), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or include a composite of silicon and amorphous carbon. According to an example embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The binder may attach the negative electrode active material particles to each other, and may attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

### Electrolyte Solution

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers ranging of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

The rechargeable lithium battery may be classified into cylindrical, prismatic, pouch, or coin-type batteries, and the like depending on their shape.

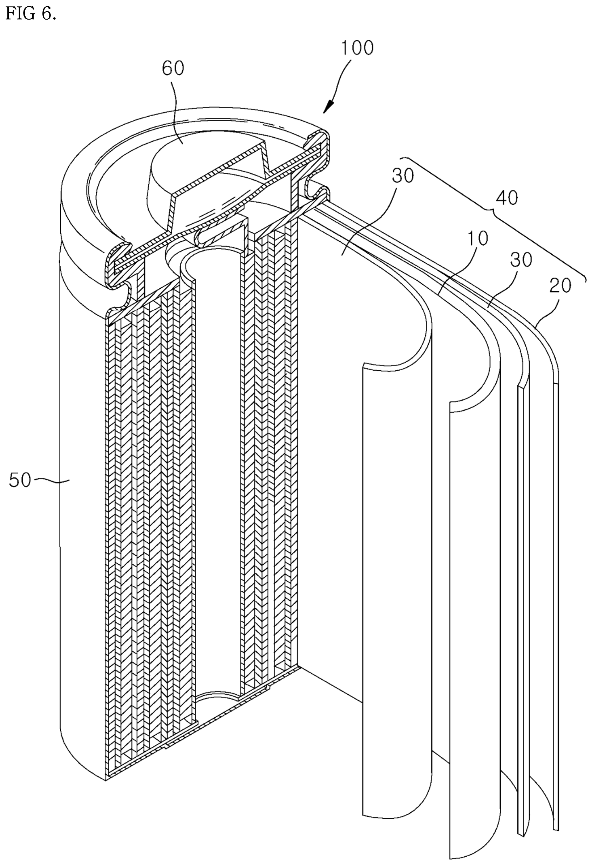

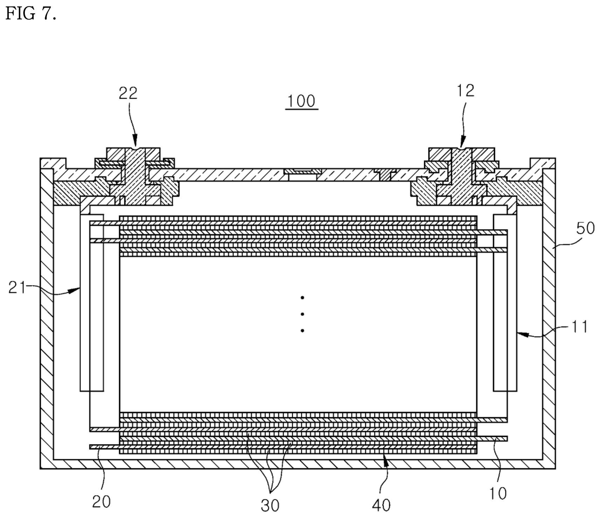

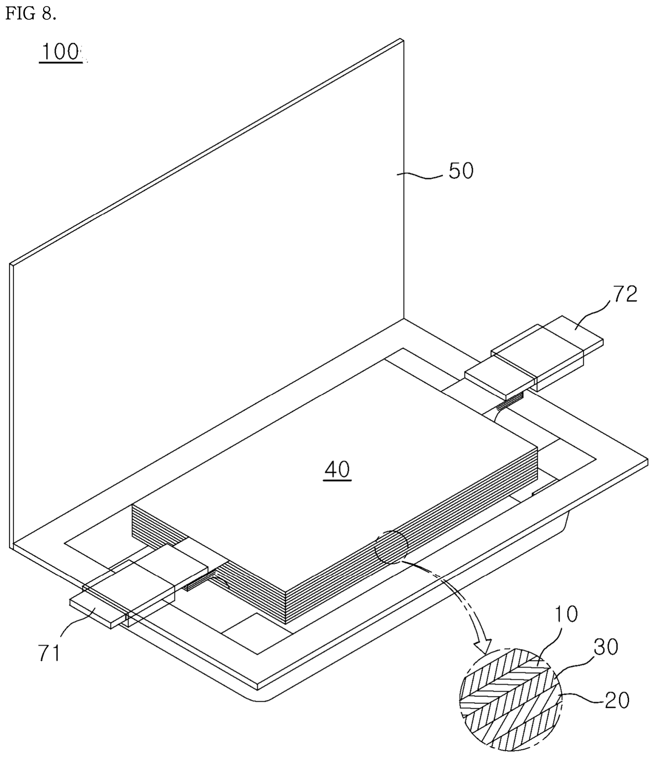

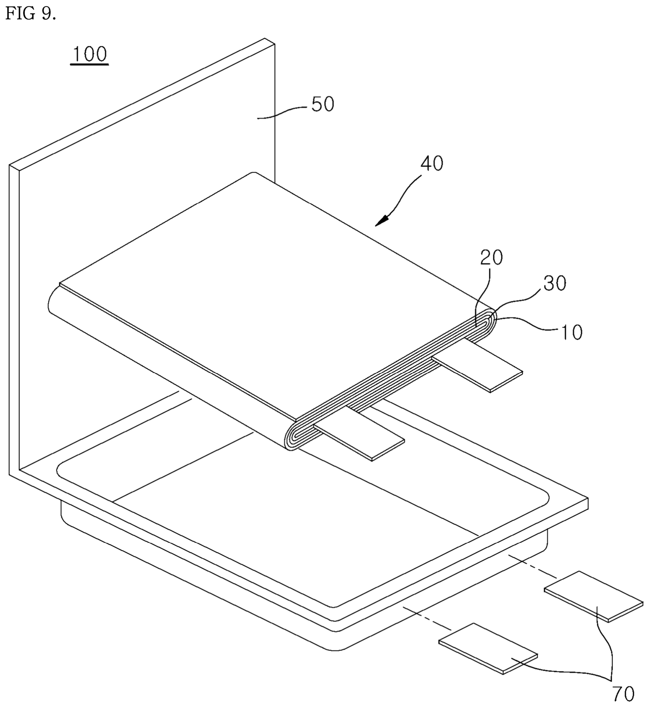

FIG. 6 to FIG. 9 are schematic views illustrating a rechargeable lithium battery according to an example embodiment. FIG. 6 shows a cylindrical battery, FIG. 7 shows a prismatic battery, and FIG. 8 and FIG. 9 show pouch-type batteries. Referring to FIG. 6 to FIG. 9, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 6. In FIG. 7, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 8 and FIG. 9, the rechargeable lithium battery 100 may include an electrode tab 70 illustrated in FIG. 9, or, for example, a positive electrode tab 71 and a negative electrode tab 72 illustrated in FIG. 8, the electrode tabs 70/71/72 forming an electric path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

Hereinafter, examples and comparative examples of the present disclosure are described. However, the following examples are merely examples of the present disclosure, and the present disclosure is not limited to the following examples.

### Example 1

### (1) Preparation of core-shell binder

800 mL of distilled water, 40 g of a core seed (a copolymer of styrene and acrylate) powder, and 0.8 g of sodium dodecyl sulfate were added to a 3 L flask equipped with a stirrer, a thermometer, and a condenser, and the air inside the flask was replaced with nitrogen. Afterwards, a solution in which the core seed was dispersed was prepared by stirring while heating the flask such that an internal temperature of the flask reached 80 °C.

Separately, 41.7 g of divinylbenzene, 53.9 g of acrylonitrile, 50 g of sodium dodecyl sulfate, and 1,000 mL of distilled water were sequentially added to a 2 L beaker and then ultrasonicated for 10 minutes at room temperature to prepare a pre-emulsion. After 14 mL of 3 wt% potassium persulfate was added to the pre-emulsion solution, the mixture was slowly and continuously added to the core seed dispersion for 1.5 hours. Afterwards, a reaction was maintained for 2 hours to perform polymerization, thereby preparing a first solution.

Separately, 29.4 g of PEG having an adhesive functional group at a terminal thereof (maleimide-polyethylene glycol-SS-CH₂CH₂-NH₂ (MAL-PEG-SS-NH₂) manufactured by CD Bioparticles), 7.5 g of potassium persulfate, and 200 mL of distilled water were sequentially added to a 500 mL beaker, mixed at room temperature for 10 minutes, and then added to the first solution, and a reaction was maintained at room temperature for 24 hours, thereby preparing a core-shell binder having a shell of Chemical Formula 8 below. The prepared core-shell binder is a particle-type binder and has an average particle diameter D50 of 500 nm. 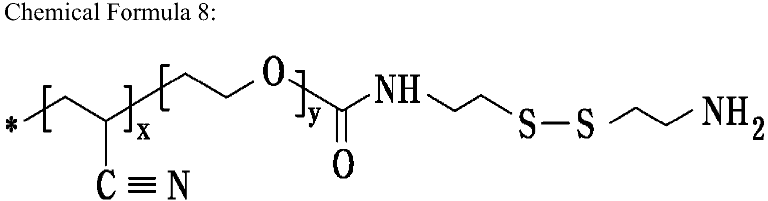 (x and y are the number of moles of each unit).

### (2) Manufacture of separator

An acrylic binder (10 wt% in distilled water) and boehmite (average particle diameter D50: 0.2 µm, cubic shape) as a filler were mixed at an acrylic binder:filler mass ratio of 1:20 based on solid content, added to a water solvent, and milled and dispersed using a bead mill at a temperature of 25 °C for 30 minutes to prepare a dispersion.

Poly(acrylic acid-co-acrylic acid lithium salt-co-acrylamide-co-2-acrylamido-2-methylpropanesulfonic acid lithium salt) in which a molar ratio of acrylic acid+acrylic acid lithium salt, acrylamide, and 2-acrylamido-2-methylpropanesulfonic acid lithium salt was 10:85:5 was used as the acrylic binder.

The dispersion was applied on each of the opposite surfaces of a polyethylene fabric (thickness of 12 µm, air permeability of 120 sec/100 cc, porous) to have a thickness of 1.5 µm using a die coating method and then dried and aged in an oven at a temperature of 80 °C for 16 hours to form a heat-resistant layer.

A coating solution was prepared by mixing 90 parts by weight of deionized (DI) water and 10 parts by weight of the prepared core-shell binder.

The coating solution was applied on each of the opposite surfaces of the formed heat-resistant layer to have a thickness of 0.5 µm using a bar coating method and then stored in an oven at a temperature of 50 °C for 1 hour to form an adhesive layer, thereby manufacturing a separator for a lithium rechargeable battery.

### Example 2

A separator was manufactured in the same manner as in Example 1, except that a ratio of acrylonitrile and PEG in a total of the acrylonitrile and the PEG was changed as shown in Table 1 below when a core-shell binder was prepared in Example 1.

### Example 3

800 mL of distilled water, 40 g of a core seed (a copolymer of styrene and acrylate) powder, and 0.8 g of sodium dodecyl sulfate were added to a 3 L flask equipped with a stirrer, a thermometer, and a condenser, and the air inside the flask was replaced with nitrogen. Afterwards, a solution in which the core seed was dispersed was prepared by stirring while heating the flask such that an internal temperature of the flask reached 80 °C.

Separately, 41.7 g of divinylbenzene, 45.8 g of acrylonitrile, 12.5 g of an acrylic acid lithium salt, 50 g of sodium dodecyl sulfate, and 1,000 mL of distilled water were sequentially added to a 2 L beaker and then ultrasonicated for 10 minutes at room temperature to prepare a pre-emulsion. After 14 mL of 3 wt% potassium persulfate was added to the pre-emulsion solution, the mixture was slowly and continuously added to the core seed dispersion for 1.5 hours. Afterwards, a reaction was maintained for 2 hours to perform polymerization, thereby preparing a first solution.

Separately, 25.0 g of PEG having an adhesive functional group at one terminal thereof (MAL-PEG-SS-CH₂CH₂-NH₂ manufactured by CD Bioparticles), 7.5 g of potassium persulfate, and 200 mL of distilled water were sequentially added to a 500 mL beaker, mixed at room temperature for 10 minutes, and then added to the first solution. Thereafter, a reaction was maintained for 24 hours to prepare a core-shell binder having a shell of Chemical Formula 9 below. The prepared core-shell binder is a particle-type binder and has an average particle diameter D50 of 500 nm. 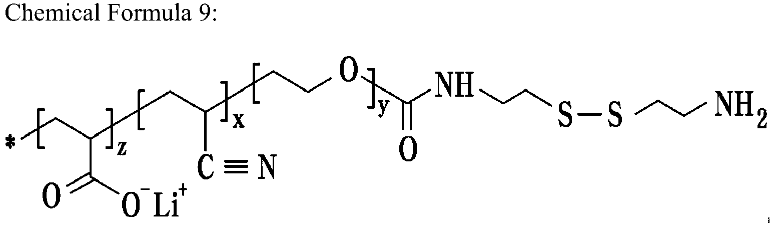 (x, y, and z are the number of moles of each unit).

A separator was manufactured in the same manner as in Example 1, except that the prepared core-shell binder was used.

### Example 4

A separator was manufactured in the same manner as in Example 1, except that a ratio of acrylonitrile, PEG having an adhesive functional group at one terminal thereof, and an acrylic acid lithium salt in a total of the acrylonitrile, the PEG having an adhesive functional group at one terminal thereof, and the acrylic acid lithium salt was changed as shown in Table 1 below when a core-shell binder was prepared in Example 3.

### Comparative Example 1

A separator was manufactured in the same manner as in Example 1, except that PEG having no adhesive functional group at a terminal thereof was used instead of PEG having an adhesive functional group at one terminal thereof in Example 1, and a core-shell binder having a shell having no adhesive functional group at a terminal thereof was used.

### Comparative Example 2

A separator was manufactured in the same manner as in Example 1, except that PEG having an adhesive functional group at one terminal thereof was not used, and a core-shell binder having a shell having a structural unit derived from acrylonitrile and an acrylic acid lithium salt was used in Example 3.

### Comparative Example 3

A separator was manufactured in the same manner as in Example 3, except that PEG having no adhesive functional group at a terminal thereof was used instead of PEG having an adhesive functional group at one terminal thereof as in Example 3, and a core-shell binder having a shell having no adhesive functional group at a terminal thereof was used.

### Comparative Example 4

A separator was manufactured in the same manner as in Example 3, except that, without acrylonitrile, a core-shell binder having a shell having a unit derived from an acrylic acid lithium salt and PEG having an adhesive functional group at one terminal thereof was used.

### Comparative Example 5

A separator was manufactured in the same manner as in Example 3, except that, in Example 3, acrylonitrile was not used, and instead of PEG having an adhesive functional group at one terminal thereof, PEG having no adhesive functional group at a terminal thereof was used, and a core-shell binder having a shell having a unit derived from PEG and an acrylic acid lithium salt was used.

The physical properties described in Table 1 below were evaluated on the separators manufactured according to Examples and Comparative Examples.

### (1) Air permeability (unit: sec/100c)

For the separators manufactured in Examples and Comparative Examples, air permeability was measured by measuring the time (units: seconds) for 100 cc of air to pass through the separator using a measuring device (EG01-55-1MR manufactured by Asahi Seiko). The air permeability was measured twice to obtain an average value.

Air permeability measurement equipment setting conditions:
Measurement pressure: 0.5 kg/cm², cylinder pressure: 2.5 kg/cm², and set time: 10 seconds

### (2) Wet adhesion to positive electrode and wet adhesion to negative electrode (unit: gf/mm)

The separator for a lithium rechargeable battery of each Example and Comparative Example was cut into a size of 3 cm×8 cm to prepare a sample.

A positive electrode slurry was prepared by mixing 97 wt% of LiCoNiAl as a positive electrode active material, 1.5 wt% of carbon nanotubes as a conductive material, and 1.5 wt% of polyvinyl fluoride, and adding water.

Aluminum foil was coated with the prepared positive electrode slurry, dried, and rolled to manufacture a positive electrode.

A negative electrode slurry was prepared by mixing 97.4 wt% of a negative electrode active material, 1.0 wt% of carboxymethyl cellulose, 1.5 wt% of styrene-butadiene rubber, and 0.1 wt% of carbon nanotubes as a conductive agent. A silicon-based negative electrode active material was used as the negative electrode active material. Copper foil was coated with the prepared negative electrode slurry, dried, and rolled to manufacture a negative electrode.

The positive electrode and the positive electrode were provided with the manufactured separator attached therebetween and then inserted into a pouch, an electrolyte (1.3 M of LiPF₆ dissolved in a mixed solvent of ethylene carbonate (EC)/ethyl methyl carbonate (EMC)/diethyl carbonate (DEC) having a volume ratio of 3/5/2) was injected into the pouch and left for 12 hours, and then the pouch was pressed under conditions of a pressure of 10 kgf/cm² to 20 kgf/cm², a temperature of 70 °C to 90 °C, and a time of 5 seconds to 20 seconds, and then disassembled. The separator and the positive electrode were taken out from the pouch, the separator was separated from a positive electrode plate by about 10 mm to about 20 mm, and then the positive electrode and the separator were pulled in opposite directions at an angle of 180° and peeled off. A peel speed was 100 mm/min, a required force was measured three times in a 20 to 40 mm section after the start of peeling, and an average value was obtained. The average value is calculated as an average value of measured values.

The negative electrode and the negative electrode were provided with the separator attached therebetween and then inserted into a pouch, an electrolyte (1.3 M of LiPF₆ dissolved in a mixed solvent of EC/EMC/DEC) having a volume ratio of 3/5/2) was injected into the pouch and left for 12 hours, and then the pouch was pressed under conditions of a pressure of 10 kgf/cm² to 20 kgf/cm², a temperature of 70 °C to 90 °C, and a time of 5 seconds to 20 seconds and then disassembled. The separator and the negative electrode were taken out from the pouch, the separator was separated from a negative electrode plate by about 10 mm to about 20 mm, and then the negative electrode and the separator were pulled in opposite directions at an angle of 180° and peeled off. A peel speed was 100 mm/min, a required force was measured three times in a 20 to 40 mm section after the start of peeling, and an average value was obtained. The average value is calculated as an average value of measured values.

### (3) EIS resistance of separator (unit: Ω)

A coin cell for resistance measurement were manufactured using a separator and an electrolyte (1.3 M of LiPF₆ dissolved in a mixed solvent of EC/EMC/DEC having a volume ratio of 3/5/2). After two separator sheets were stacked and cut into a circular shape with a diameter of 19 mm, the separator was placed on a case, a gasket was placed on the separator, and 10 drops of the electrolyte were applied. A spacer with a thickness of 1 mm was placed on the separator. Next, a spring was placed on the result to prevent a gap between an upper end and a lower end inside a CR2032 coin cell, and the CR2032 coin cell was covered with a cap and sealed using a dedicated clamper. When the CR2032 coin cell was manufactured, a CR2032 material manufactured by Hohsen Corp. was used. The resistance of the coin cell was measured using electrochemical impedance spectroscopy (EIS).

**Table 1:**

| | | Examples | | | | Comparative Examples | | | | |
|---|---|---|---|---|---|---|---|---|---|---|
| | | 1 | 2 | 3 | 4 | 1 | 2 | 3 | 4 | 5 |
| core-shell binder (particle type binder) | Polyethyleneglycol (mass ratio) | 0.35 | 0.67 | 0.30 | 0.60 | 0.35 | 0.00 | 0.30 | 0.67 | 0.67 |
| | Acrylonitrile (mass ratio) | 0.65 | 0.33 | 0.55 | 0.30 | 0.65 | 0.79 | 0.55 | 0.00 | 0.00 |
| | Acrylic acid lithium salt (mass ratio) | 0.00 | 0.00 | 0.15 | 0.10 | 0.00 | 0.21 | 0.15 | 0.33 | 0.33 |
| | Terminal adhesive functional group | inclusion | inclusion | Inclusion | inclusion | Non-inclusion | Non-inclusion | Non-inclusion | inclusion | Non-inclusion |
| thickness*(um) | heat-resistant layer | 1.5 | 1.5 | 1.5 | 1.5 | 1.5 | 1.5 | 1.5 | 1.5 | 1.5 |
| | Adhesive layer | 0.5 | 0.5 | 0.5 | 0.5 | 0.5 | 0.5 | 0.5 | 0.5 | 0.5 |
| Air permeability | | 150 | 151 | 150 | 149 | 149 | 151 | 152 | 150 | 150 |
| Wet adhesion | Positive electrode | 1.17 | 1.01 | 0.95 | 0.89 | 0.82 | 0.82 | 0.73 | 0.56 | 0.38 |
| | Negative electrode | 0.86 | 0.79 | 0.79 | 0.79 | 0.78 | 0.78 | 0.71 | 0.55 | 0.46 |
| resistance | | 0.59 | 0.63 | 0.61 | 0.65 | 0.57 | 0.66 | 0.60 | 0.57 | 0.54 |

| | | | | | | | | | | |
|---|---|---|---|---|---|---|---|---|---|---|
| * Thickness: when a heat-resistant layer and an adhesive layer are each formed on each of the opposite surfaces of a porous substrate, a thickness of only one layer is described. | | | | | | | | | | |

As shown in Table 1 above, the separators for a lithium rechargeable battery of Examples may have low resistance and significantly high wet adhesion to each of a positive electrode and a negative electrode.

### Example 5

### (1) Preparation of core-shell binder

800 mL of distilled water, 40 g of a core seed (a copolymer of styrene and acrylate) powder, and 0.8 g of sodium dodecyl sulfate were added to a 3 L flask equipped with a stirrer, a thermometer, and a condenser, and the air inside the flask was replaced with nitrogen. Afterwards, a solution in which the core seed was dispersed was prepared by stirring while heating the flask such that an internal temperature of the flask reached 80 °C.

Separately, 41.7 g of divinylbenzene, 53.9 g of acrylonitrile, 50 g of sodium dodecyl sulfate, and 1,000 mL of distilled water were sequentially added to a 2 L beaker and then ultrasonicated for 10 minutes at room temperature to prepare a pre-emulsion. After 14 mL of 3 wt% potassium persulfate was added to the pre-emulsion solution, the mixture was slowly and continuously added to the core seed dispersion for 1.5 hours. Afterwards, a reaction was maintained for 2 hours to perform polymerization, thereby preparing a first solution.

Separately, 29.4 g of PEG having an adhesive functional group at a terminal thereof (MAL-PEG-SS-CH₂CH₂-NH₂ manufactured by CD Bioparticles), 7.5 g of potassium persulfate, and 200 mL of distilled water were sequentially added to a 500 mL beaker, mixed at room temperature for 10 minutes, and then added to the first solution, and a reaction was maintained at room temperature for 24 hours, thereby preparing a core-shell binder having a shell of Chemical Formula 8 below. The prepared core-shell binder is a particle-type binder and has an average particle diameter D50 of 500 nm. 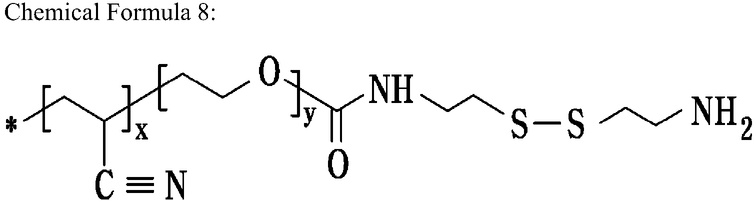 (x and y are the number of moles of each unit).

### (2) Preparation of linear binder I

The entire process of synthesizing a linear binder I was performed under a nitrogen atmosphere.

40 g of HOOC-PEG-COOH (COOH-CH₂O-(PEG)-CH₂-COOH) (18.8 mmol) was dissolved in 1 L of dichloromethane (DCM) in a 3 L flask equipped with a stirrer, a thermometer, and a condenser. Afterwards, 4.64 g of N,N'-dicyclohexylcarbodiimide (DCC, 22.56 mmol) and 2.6 g of N-hydroxysuccinimide (NHS, 22.56 mmol) were added at room temperature and then stirred for 12 hours. Afterwards, the solution was slowly and continuously added to a solution, in which 28.64 g of cystamine (0.19 mol) was dissolved in 200 mL of DCM, in a 5 L flask and then stirred for 24 hours. The mixed solution in which a reaction was completed was cooled to a temperature of 0 °C and then filtered to separate a precipitate. The filtrate is evaporated under vacuum, the remaining residue was dissolved in 400 mL of DMSO, and then dialysis was performed in distilled water to remove impurities. The linear binder I may be obtained by removing the remaining moisture through freeze drying. The linear binder I is represented by Chemical Formula 10 below.

The linear binder includes 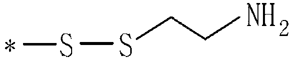 in Chemical Formula 8 above. 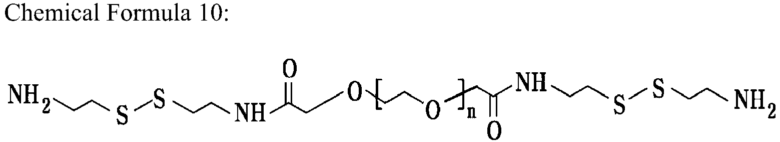 (n is the number of repetitions of each unit).

### (3) Manufacture of separator

An acrylic binder (10 wt% in distilled water) and boehmite (average particle diameter D50: 0.2 µm, cubic shape) as a filler were mixed at an acrylic binder:filler mass ratio of 1:20 based on solid content, added to a water solvent, and milled and dispersed using a bead mill at a temperature of 25 °C for 30 minutes to prepare a dispersion.

Poly(acrylic acid-co-acrylic acid lithium salt-co-acrylamide-co-2-acrylamido-2-methylpropanesulfonic acid lithium salt) in which a molar ratio of acrylic acid+acrylic acid lithium salt, acrylamide, and 2-acrylamido-2-methylpropanesulfonic acid lithium salt was 10:85:5 was used as the acrylic binder.

The dispersion was applied on each of the opposite surfaces of a polyethylene fabric (thickness of 12 µm, air permeability of 120 sec/100 cc, porous) to have a thickness of 1 µm using a die coating method and then dried and aged in an oven at a temperature of 80 °C for 16 hours to form a heat-resistant layer.

A coating solution was prepared by mixing 90 parts by weight of DI water, 9 parts by weight of the prepared core-shell binder, and 1 part by weight of the prepared linear binder I.

The coating solution was applied on each of the opposite surfaces of the heat-resistant layer to a have thickness of 0.5 µm using a bar coating method and then stored in an oven at a temperature of 50 °C for 1 hour to form an adhesive layer, thereby manufacturing a separator for a lithium rechargeable battery.

### Example 6

The entire process of synthesizing a linear binder II was performed under a nitrogen atmosphere.

40 g of mPEG-COOH (H₃C-(OCH₂CH₂)ₙ-COOH) (20 mmol) was dissolved in 1 L of DCM in a 3 L flask equipped with a stirrer, a thermometer, and a condenser. Afterwards, 5 g of DCC (23.5 mmol) and 2.75 g of NHS (23.5 mmol) were added at room temperature and then stirred for 5 hours. Next, the solution was slowly and continuously added to a solution, in which 47.5 g of cystamine (0.19 mol) was dissolved in 1 L of DCM, in a 5 L flask and then stirred for 24 hours. The mixed solution in which a reaction was completed was cooled to a temperature of 0 °C and then filtered to separate a precipitate. The filtrate is evaporated under vacuum, the remaining residue was dissolved in 400 mL of DMSO, and then dialysis was performed in distilled water to remove impurities. The linear binder II may be obtained by removing the remaining moisture through freeze drying. The linear binder II is represented by Chemical Formula 11 below. 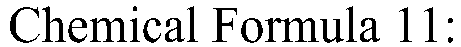 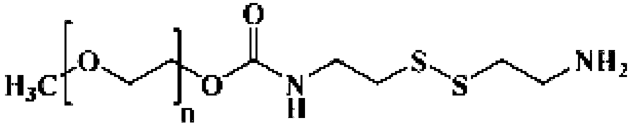 (n is the number of repetitions of each unit).

A separator was manufactured in the same manner as in Example 5, except that the prepared linear binder II was used.

### Example 7

800 mL of distilled water, 40 g of a core seed (a copolymer of styrene and acrylate) powder, and 0.8 g of sodium dodecyl sulfate were added to a 3 L flask equipped with a stirrer, a thermometer, and a condenser, and the air inside the flask was replaced with nitrogen. Afterwards, a solution in which the core seed was dispersed was prepared by stirring while heating the flask such that an internal temperature of the flask reached 80 °C.

Separately, 41.7 g of divinylbenzene, 45.8 g of acrylonitrile, 12.5 g of an acrylic acid lithium salt, 50 g of sodium dodecyl sulfate, and 1,000 mL of distilled water were sequentially added to a 2 L beaker and then ultrasonicated for 10 minutes at room temperature to prepare a pre-emulsion. After 14 mL of 3 wt% potassium persulfate was added to the pre-emulsion solution, the mixture was slowly and continuously added to the core seed dispersion for 1.5 hours. Afterwards, a reaction was maintained for 2 hours to perform polymerization, thereby preparing a first solution.

Separately, 25.0 g of PEG having an adhesive functional group at one terminal thereof (MAL-PEG-SS-CH₂CH₂-NH₂ manufactured by CD Bioparticles), 7.5 g of potassium persulfate, and 200 mL of distilled water were sequentially added to a 500 mL beaker, mixed at room temperature for 10 minutes, and then added to the first solution. Thereafter, a reaction was maintained for 24 hours to prepare a core-shell binder having a shell of Chemical Formula 9 below. The prepared core-shell binder is a particle-type binder and has an average particle diameter D50 of 500 nm. 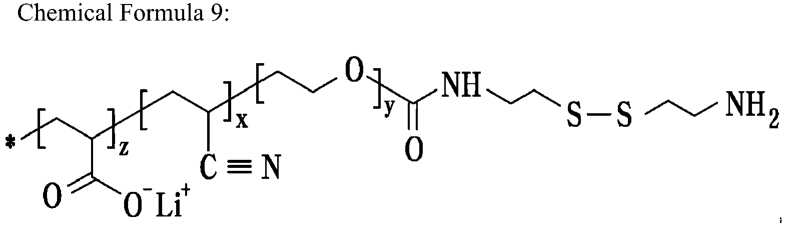 (x, y, and z are the number of moles of each unit).

A separator was manufactured in the same manner as in Example 1, except that the prepared core-shell binder was used.

### Example 8

A separator for a lithium rechargeable battery was manufactured in the same manner as in Example 7, except that the linear binder II prepared in Example 6 was used instead of the linear binder I.

### Example 9

A separator for a lithium rechargeable battery was manufactured in the same manner as in Example 5, except that, in Example 5, polyethylene glycol dimethyl ester (H₃CO-PEG-CH₃, Mₙ=2,000) (linear binder III) was used as the prepared linear binder.

### Comparative Example 6

A separator for a lithium rechargeable battery was manufactured in the same manner as in Example 5, except that, in Example 5, PEG having no adhesive functional group at a terminal thereof was used, a core-shell structure binder having a shell having no terminal adhesive functional group used, and the linear binder II prepared in Example 6 was used.

### Comparative Example 7

A separator for a lithium rechargeable battery was manufactured in the same manner as in Example 5, except that, in Example 5, PEG having no adhesive functional group at a terminal thereof was used, a core-shell structure binder having a shell having no terminal adhesive functional group and polyethylene glycol dimethyl ester (H₃CO-PEG-CH₃, Mn=2,000) (linear binder III) were used.

The physical properties of Table 2 below were evaluated on the separators manufactured according to Examples and Comparative Examples.

Air permeability (unit: sec/100c), wet adhesion to a negative electrode and wet adhesion to a positive electrode (unit: gf/mm), and EIS resistance (unit: Ω) of the separator were measured in the same manner as described above.

**Table 2:**

| | | Examples | | | | | Comparative examples | |
|---|---|---|---|---|---|---|---|---|
| | | 5 | 6 | 7 | 8 | 9 | 6 | 7 |
| Core-shell binder | Polyethyleneg lycol (mass ratio) | 0.35 | 0.35 | 0.3 | 0.3 | 0.35 | 0.35 | 0.35 |
| | Acrylonitrile (mass ratio) | 0.65 | 0.65 | 0.55 | 0.55 | 0.65 | 0.65 | 0.65 |
| | Acrylic acid (mas ratio) | 0 | 0 | 0.15 | 0.15 | 0 | 0 | 0 |
| | Terminal adhesive functional group | inclusi on | inclusio n | inclusio n | inclusio n | inclusion | Non inclusion | Non inclusion |
| Linear binder | Type | Linear binder I | Linear binder II | Linear binder I | Linear binder II | Linear binder III | Linear binder II | Linear binder III |
| | terminal adhesive functional group | inclusi on | inclusio n | inclusio n | inclusio n | Non inclusion | inclusion | Non inclusion |
| Thickne ss*(*µ*m) | heat-resistant layer | 1 | 1 | 1 | 1 | 1 | 1 | 1 |
| | Adhesive layer | 0.5 | 0.5 | 0.5 | 0.5 | 0.5 | 0.5 | 0.5 |
| Air permeability | | 156 | 157 | 155 | 156 | 156 | 154 | 154 |
| Wet adhesiv e | Positive electrode | 1.31 | 1.23 | 1.20 | 1.13 | 0.93 | 0.85 | 0.71 |
| | Negative electrode | 0.95 | 0.91 | 0.88 | 0.84 | 0.76 | 0.79 | 0.68 |
| resistance | | 0.61 | 0.6 | 0.64 | 0.62 | 0.63 | 0.58 | 0.57 |

| | | | | | | | | |
|---|---|---|---|---|---|---|---|---|
| * Thickness: when a heat-resistant layer and an adhesive layer are each formed on each of the opposite surfaces of a porous substrate, a thickness of only one layer is described. | | | | | | | | |

As shown in Table 2 above, the separators for a lithium rechargeable battery of Examples had significantly high adhesion to each of a positive electrode and a negative electrode and low resistance. However, as shown in Table 2 above, the separators of the Comparative Examples did not have a good effect in adhesion to each of a positive electrode and a negative electrode and resistance as compared to Examples.

### Example 10

### (1) Preparation of core-shell binder

800 mL of distilled water, 40 g of a core seed (a copolymer of styrene and acrylate) powder, and 0.8 g of sodium dodecyl sulfate were added to a 3 L flask equipped with a stirrer, a thermometer, and a condenser, and the air inside the flask was replaced with nitrogen. Afterwards, a solution in which the core seed was dispersed was prepared by stirring while heating the flask such that an internal temperature of the flask reached 80 °C.

Separately, 41.7 g of divinylbenzene, 52.5 g of acrylonitrile, 50 g of sodium dodecyl sulfate, and 1,000 mL of distilled water were sequentially added to a 2 L beaker and then ultrasonicated for 10 minutes at room temperature to prepare a pre-emulsion. After 14 mL of 3 wt% potassium persulfate was added to the pre-emulsion solution, the mixture was slowly and continuously added to the core seed dispersion for 1.5 hours. Afterwards, a reaction was maintained for 2 hours to perform polymerization, thereby preparing a first solution.

Separately, 30.8 g of PEG having an adhesive functional group at a terminal thereof (MAL-PEG-SS-CH₂CH₂-NH₂ manufactured by CD Bioparticles), 7.5 g of potassium persulfate, and 200 mL of distilled water were sequentially added to a 500 mL beaker, mixed at room temperature for 10 minutes, and then added to the first solution, and a reaction was maintained at room temperature for 24 hours, thereby preparing a core-shell binder having a shell of Chemical Formula 8 below. Through the reaction, in a total of 100 parts by mass of PEG having an adhesive functional group at a terminal thereof and acrylonitrile, 37 parts by weight of the PEG having an adhesive functional group at a terminal thereof and 63 parts by weight of the acrylonitrile were polymerized. The prepared core-shell binder is a particle-type binder and has an average particle diameter D50 of 500 nm. 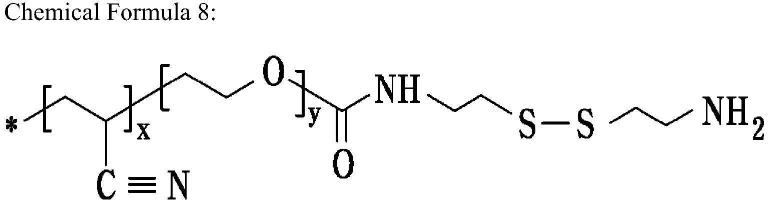 (x and y are the number of moles of each unit).

### (2) Preparation of linear binder I

The entire process of synthesizing a linear binder I was performed under a nitrogen atmosphere.

40 g of HOOC-PEG-COOH (COOH-CH₂O-PEG-CH₂-COOH) (18.8 mmol) was dissolved in 1 L of DCM) in a 3 L flask equipped with a stirrer, a thermometer, and a condenser. Afterwards, 4.64 g of DCC (22.56 mmol) and 2.6 g of NHS (22.56 mmol) were added at room temperature and then stirred for 12 hours. Afterwards, the solution was slowly and continuously added to a solution, in which 28.64 g of cystamine (0.19 mol) was dissolved in 200 mL of DCM, in a 5 L flask and then stirred for 24 hours. The mixed solution in which a reaction was completed was cooled to a temperature of 0 °C and then filtered to separate a precipitate. The filtrate is evaporated under vacuum, the remaining residue was dissolved in 400 mL of DMSO, and then dialysis was performed in distilled water to remove impurities. The linear binder I may be obtained by removing the remaining moisture through freeze drying. The linear binder I is represented by Chemical Formula 10 below.

The linear binder I includes 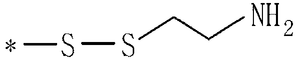 in Chemical Formula 8 above. 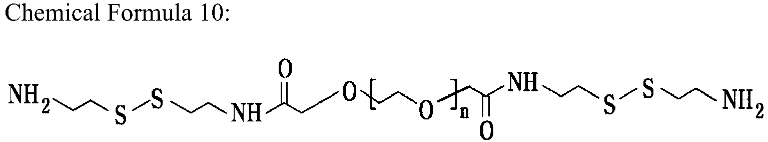 (n is the number of repetitions of each unit).

### (3) Manufacture of separator

An acrylic binder (10 wt% in distilled water) and boehmite (average particle size D50: 200 nm, cubic shape, having a hydroxyl group on a surface thereof) as a filler were mixed, added to a water solvent, and then milled and dispersed using a bead mill at a temperature of 25 °C for 30 minutes to prepare a dispersion.

Poly(acrylic acid-co-acrylic acid lithium salt-co-acrylamide-co-2-acrylamido-2-methylpropanesulfonic acid lithium salt) in which a molar ratio of acrylic acid+acrylic acid lithium salt, acrylamide, and 2-acrylamido-2-methylpropanesulfonic acid lithium salt was 10:85:5 was used as the acrylic binder.

The prepared core-shell binder and linear binder I were added to the dispersion, placed in a water solvent, and mixed at a temperature of 25 °C for 30 minutes to prepare a composition for a coating layer.

In the composition for a coating layer, the acrylic binder, the core-shell binder, and the linear binder are included in a weight ratio of 10:0.8:0.2, and a weight ratio of the filler to the total of the acrylic binder, the core-shell binder, and the linear binder is 20:1.

The composition for a coating layer was applied on each of the opposite surfaces of a polyethylene fabric (thickness of 12 µm, air permeability of 120 sec/100 cc, porous) to have a thickness of 1 µm using a die coating method and then dried and aged in an oven at a temperature of 80 °C for 16 hours to form a coating layer.

### Example 11

The entire process of synthesizing a linear binder II was performed under a nitrogen atmosphere.

40 g of mPEG-COOH (H₃C-(OCH₂CH₂)ₙ-COOH) (20 mmol) was dissolved in 1 L of DCM in a 3 L flask equipped with a stirrer, a thermometer, and a condenser. Afterwards, 5 g of DCC (23.5 mmol) and 2.75 g of NHS (23.5 mmol) were added at room temperature and then stirred for 5 hours. Next, the solution was slowly and continuously added to a solution, in which 47.5 g of cystamine (0.19 mol) was dissolved in 1 L of DCM, in a 5 L flask and then stirred for 24 hours. The mixed solution in which a reaction was completed was cooled to a temperature of 0 °C and then filtered to separate a precipitate. The filtrate is evaporated under vacuum, the remaining residue was dissolved in 400 mL of DMSO, and then dialysis was performed in distilled water to remove impurities. The linear binder II may be obtained by removing the remaining moisture through freeze drying. The linear binder II is represented by Chemical Formula 11 below. 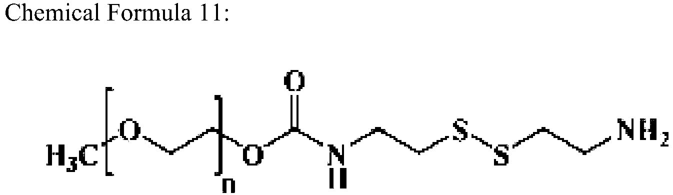 (n is the number of repetitions of each unit).

A separator was manufactured in the same manner as in Example 10, except that the prepared linear binder II was used.

### Example 12

800 mL of distilled water, 40 g of a core seed (a copolymer of styrene and acrylate) powder, and 0.8 g of sodium dodecyl sulfate were added to a 3 L flask equipped with a stirrer, a thermometer, and a condenser, and the air inside the flask was replaced with nitrogen. Afterwards, a solution in which the core seed was dispersed was prepared by stirring while heating the flask such that an internal temperature of the flask reached 80 °C.

Separately, 41.7 g of divinylbenzene, 45.8 g of acrylonitrile, 12.5 g of an acrylic acid lithium salt, 50 g of sodium dodecyl sulfate, and 1,000 mL of distilled water were sequentially added to a 2 L beaker and then ultrasonicated for 10 minutes at room temperature to prepare a pre-emulsion. After 14 mL of 3 wt% potassium persulfate was added to the pre-emulsion solution, the mixture was slowly and continuously added to the core seed dispersion for 1.5 hours. Afterwards, a reaction was maintained for 2 hours to perform polymerization, thereby preparing a first solution.

Separately, 25.0 g of PEG having an adhesive functional group at one terminal thereof (MAL-PEG-SS-CH₂CH₂-NH₂ manufactured by CD Bioparticles), 7.5 g of potassium persulfate, and 200 mL of distilled water were sequentially added to a 500 mL beaker, mixed at room temperature for 10 minutes, and then added to the first solution. Thereafter, a reaction was maintained for 24 hours to prepare a core-shell binder having a shell of Chemical Formula 9 below. Through the reaction, in a total of 100 parts by mass of PEG having an adhesive functional group at a terminal thereof, acrylonitrile, and an acrylic acid lithium salt, 30 parts by weight of the PEG having an adhesive functional group at a terminal thereof, 55 parts by weight of the acrylonitrile, and 15 parts by weight of the acrylic acid lithium salt were polymerized.

The prepared core-shell binder is a particle-type binder and has an average particle diameter D50 of 500 nm. 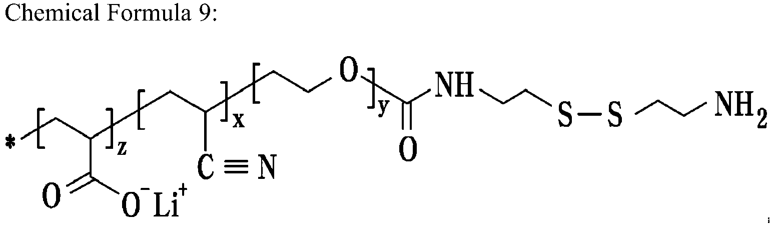 (x, y, and z are the number of moles of each unit).

A separator was manufactured in the same manner as in Example 10, except that the prepared core-shell binder was used.

### Example 13

A separator was manufactured in the same manner as in Example 12, except that, in Example 12, the linear binder II prepared in Example 11 was used instead of the linear binder I.

### Example 14

A separator was manufactured in the same manner as in Example 10, except that, in Example 10, the linear binder I was not included.

### Comparative Example 8

A separator was manufactured in the same manner as in Example 10, except that, in Example 10, PEG having no terminal adhesive functional group was use, and a core-shell binder having a shell having no terminal adhesive functional group was used.

### Comparative Example 9

A separator was manufactured in the same manner as in Example 1, except that, in Example 10, a core-shell binder was not included.

The physical properties of Table 3 below were evaluated on the separators manufactured according to Examples and Comparative Examples.

Air permeability (unit: sec/100c), wet adhesion to a negative electrode and wet adhesion to a positive electrode (unit: gf/mm), and EIS resistance (unit: Ω) of the separator were measured in the same manner as described above.
Thermal shrinkage rate (unit: %)

The separator of each Example and Comparative Example was cut into a size of 8 cm×8 cm to prepare a sample. After a 5 cm×5 cm quadrangle was drawn on a surface of the sample, the sample was inserted between sheets of paper or alumina powders, left in an oven at a temperature of 130 °C for 1 hour, and then taken out from the oven to measure the dimensions of sides of the drawn quadrangle, thereby calculating thermal shrinkage rates in an MD and a TD. The thermal shrinkage rate is calculated according to Equation 1 below.$Thermal shrinkage rate = \left(L0 - L1\right) / L 0 \times 100 .$

L0 is the initial length of the separator, and L1 is the length of the separator after being left at a temperature of 130 °C for 1 hour.

**Table 3:**

| | | Examples | | | | | Comparative examples | |
|---|---|---|---|---|---|---|---|---|
| | | 10 | 11 | 12 | 13 | 14 | 8 | 9 |
| Core-shell binder | polyethyleneglycol (mass ratio) | 0.37 | 0.37 | 0.3 | 0.3 | 0.37 | 0.37 | - |
| | acrylonitrile (mass ratio) | 0.63 | 0.63 | 0.55 | 0.55 | 0.63 | 0.63 | - |
| | Acrylic acid (mass ratio) | 0 | 0 | 0.15 | 0.15 | 0 | 0 | - |
| | Terminal adhesive functional group | inclusion | Inclusion | inclusion | inclusion | inclusion | Non inclusion | - |
| Liner binder | Type | binder I | binder II | binder I | binder II | - | binder I | binder I |
| | Terminal adhesive functional group | inclusion | Inclusion | inclusion | inclusion | - | inclusion | inclusion |
| Weight ratio in coating layer | Acrylic binder : core-shell binder : liner binder | 10:0.8:0.2 | 10:0.8:0.2 | 10:0.8:0.2 | 10:0.8:0.2 | 10:1:0 | 10:0.8:0.2 | 10:0:1 |
| | filler : total of acrylic binder + core-shell binder + linear binder | 20:1 | 20:1 | 20:1 | 20:1 | 20:1 | 20:1 | 20:1 |
| Air permeability | | 148 | 149 | 146 | 147 | 142 | 149 | 150 |
| Wet adhesion | Positive electrode | 1.08 | 1.03 | 1.04 | 0.97 | 1.06 | 0.81 | 0.65 |
| | Negative electrode | 0.87 | 0.82 | 0.86 | 0.78 | 0.81 | 0.57 | 0.41 |
| resistance | | 0.58 | 0.57 | 0.62 | 0.6 | 0.57 | 0.62 | 0.68 |
| Thermal shrinkage rate | MD | 7.61 | 11.29 | 8.12 | 12.44 | 17.18 | 13.01 | 16.22 |
| | TD | 2.71 | 4.15 | 3.12 | 4.78 | 8.17 | 5.28 | 7.94 |

As shown in Table 3 above, the separators of Examples provided high adhesion to each of a positive and a negative electrode, a low thermal shrinkage rate, low membrane resistance, and improved air permeability.

Although example embodiments of the present disclosure have been described above, the present disclosure is not limited thereto and may be modified in any form within the scope of the claims, the detailed description of the present disclosure, and the accompanying drawings, and the modifications also fall within the scope of the present disclosure.

## Claims

1. A separator for a rechargeable battery, the separator comprising:
a porous substrate; and
a coating layer formed on at least one surface of the porous substrate,
wherein the coating layer includes a core-shell binder having a core and a shell surrounding the core, and
the shell has an adhesive functional group at a terminal thereof and has an alkylene glycol group-containing structural unit and a cyano group-containing structural unit.

2. The separator of claim 1, wherein the core-shell binder comprises an aqueous adhesive binder.

3. The separator of any one of claims 1 or 2, wherein the core-shell binder is a particle-type binder and has an average particle diameter D50 of about 700 nm or less.

4. The separator of any one of claims 1 to 3, wherein the adhesive functional group comprises a combination of one or more of a -COOH group, an -OH group, an -NH₂ group, a -C(=O)H group, a -C(=O)NH₂ group, and a -SS- group.

5. The separator of claim 4, wherein the adhesive functional group is represented by Chemical Formula 6:
Chemical Formula 6: *-S-S- R¹¹ ;
wherein R¹¹ comprises a substituted or unsubstituted C₁-C₁₀ alkyl group or a substituted or unsubstituted C₆-C₁₀ aryl group; preferably wherein the adhesive functional group comprises *-S-S-CH₂CH₂-NH₂ or *-S-S-C₆H₅-NH₂.

6. The separator of any one of claims 1 to 5, wherein the adhesive functional group is bonded to at least one of the alkylene glycol group-containing structural unit and the cyano group-containing structural unit through a linker; preferably wherein the linker is represented by Chemical Formulas 7-1 to 7-12: 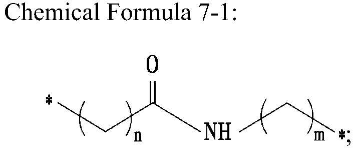 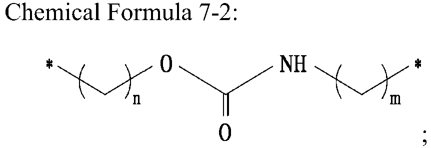 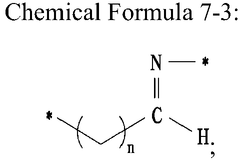 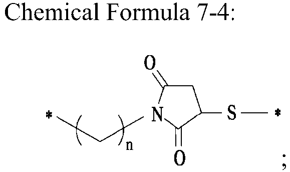 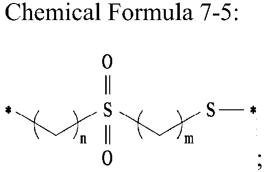 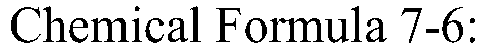 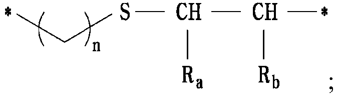 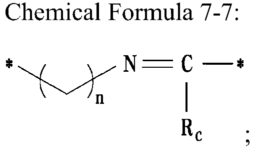 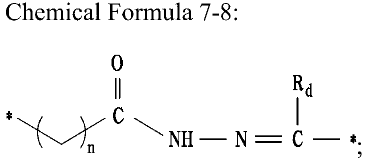 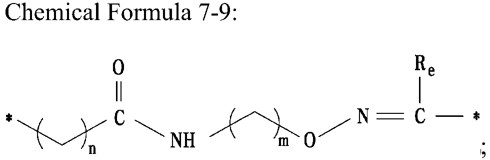 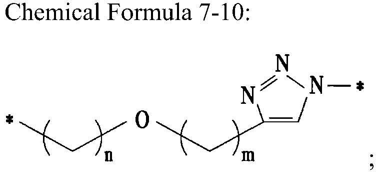 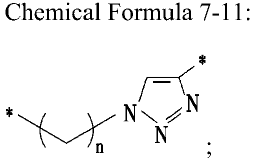 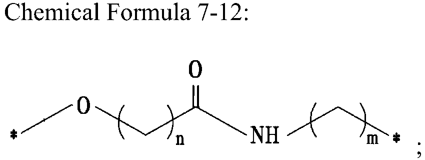 wherein n and m are each an integer greater than or equal to 0, and Rₐ, R_{b}, R_{c}, R_{d}, and Rₑ are each independently hydrogen or a substituted or unsubstituted C₁-C₁₀ alkyl group.

7. The separator of any one of claims 1 to 6, wherein the alkylene glycol group-containing structural unit is represented by Chemical Formula 1, and the cyano group-containing structural unit is represented by Chemical Formula 2: 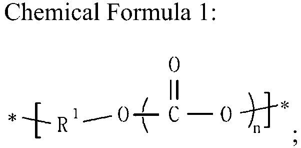
wherein n is equal to 0 or 1, and R¹ comprises a straight or branched, substituted or unsubstituted C₁-C₁₀ alkylene group, and 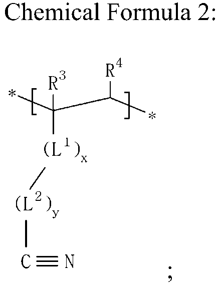
wherein R³ and R⁴ are each independently hydrogen or a C₁-C₃ alkyl group, L¹ comprises - C(=O)-, -C(=O)O-, -OC(=O)-, -O-, or -C(=O)NH-, x is an integer ranging from 0 to 2, L² comprises a substituted or unsubstituted C₁-C₁₀ alkylene group, a substituted or unsubstituted C₃-C₂₀ cycloalkylene group, a substituted or unsubstituted C₆-C₂₀ arylene group, or a substituted or unsubstituted C₃-C₂₀ heterocyclic group, and y is an integer ranging from 0 to 2.

8. The separator of any one of claims 1 to 7, wherein the shell comprises:
a second copolymer; and
with respect to 100 mol% of repeating units of the second copolymer, the alkylene glycol group-containing structural unit in an amount in a range of about 15 mol% to about 85 mol% and the cyano group-containing structural unit in an amount in a range of about 15 mol% to about 80 mol%, and the adhesive functional group is bonded to one terminal of the alkylene glycol group-containing structural unit.

9. The separator of any one of claims 1 to 8, wherein the shell further comprises a structural unit derived from (meth)acrylic acid or (meth)acrylate; preferably wherein the structural unit derived from the (meth)acrylic acid comprises a lithium cation.

10. The separator of claim , wherein the shell comprises:
a second copolymer; and
with respect to 100 mol% of repeating units of the second copolymer, the alkylene glycol group-containing structural unit in an amount in a range of about 15 mol% to about 85 mol%, the cyano group-containing structural unit in an amount in a range of about 15 mol% to about 80 mol%, and the structural unit derived from the (meth)acrylic acid or the (meth)acrylate in an amount in a range of more than about 0 mol% to about 70 mol%, and the adhesive functional group is bonded to one terminal of the alkylene glycol group-containing structural unit.

11. The separator of any one of claims 1 to 10, wherein the shell comprises a combination of one or more of Formulas 8 and 9: 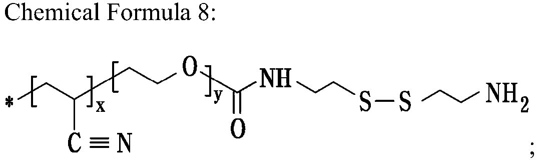
wherein x and y are a number of moles of each unit, and 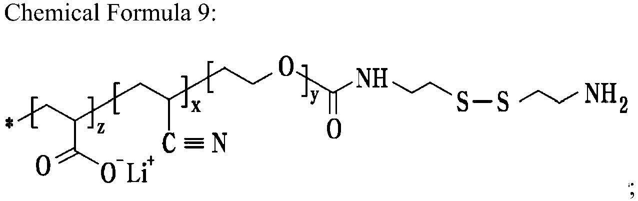
wherein x, y, and z are a number of moles of each unit.

12. The separator of any one of claims 1 to 11, wherein the core-shell binder in the coating layer is included in an amount in a range of about 0.01 wt% to about 30 wt%, referring to the total weight of the coating layer.

13. The separator of any one of claims 1 to 12, wherein the coating layer comprises at least one of a heat-resistant binder, a heat-resistant adhesive binder, and a filler; preferably wherein the heat-resistant binder comprises a (meth)acrylic binder including a sulfonate group-containing structural unit, preferably wherein the (meth)acrylic binder further comprises at least one of a structural unit derived from (meth)acrylate or (meth)acrylic acid, a cyano group-containing structural unit, and a structural unit derived from (meth)acrylamide.

14. The separator of claim 13, wherein the coating layer comprises a heat-resistant layer including the heat-resistant binder and the filler, and an adhesive layer located on the heat-resistant layer and including the core-shell binder.

15. The separator of any one of claims 1 to 14, wherein the coating layer further comprises a linear binder; preferably wherein the linear binder has a terminal functional group; preferably wherein the terminal functional group comprises an adhesive functional group; preferably wherein the adhesive functional group comprises a combination of one or more of a -COOH group, an -OH group, an -NH₂ group, a -C(=O)H group, a -C(=O)NH₂ group, and a -SS- group; and particularly preferably wherein the adhesive functional group of the core-shell binder is the same as the adhesive functional group of the linear binder.

16. The separator of claim 15, wherein a functional group having the -SS- group is resented by Chemical Formula 6:
Chemical Formula 6: *-S-S-R¹¹ ;
wherein R¹¹ is a substituted or unsubstituted C₁-C₁₀ alkyl group or a substituted or unsubstituted C₆-C₁₀ aryl group, preferably wherein a functional group having the -SS- group comprises one of *-SS-CH₂CH₂-NH₂ and *-SS-C₆H₅-NH₂.

17. The separator of any one of claims 15 or 16, wherein a main chain of the linear binder has at least one of an alkylene glycol group-containing structural unit, a cyano group-containing structural unit, and a structural unit derived from (meth)acrylic acid or (meth)acrylate.

18. The separator of any one of claims 15 to 17, wherein the linear binder has a combination of one or more of Chemical Formulas 9 and 10: 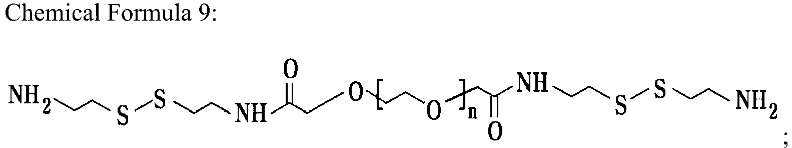 , and 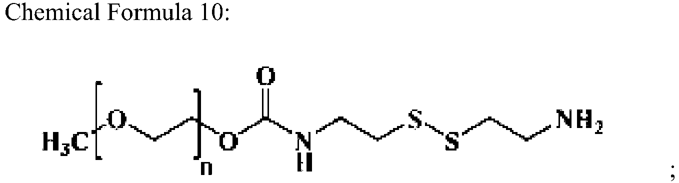 wherein n is a number of repetitions of each unit.

19. The separator of any one of claims 15 to 18, wherein the core-shell binder and the linear binder in the coating layer are included in a weight ratio in a range of about 2:1 to about 20:1, preferably wherein the core-shell binder in the coating layer is included in an amount in a range of about 0.01 wt% to about 30 wt%, and the linear binder in the coating layer is included in an amount in a range of about 0.01 wt% to about 25 wt%, referring to the total weight of the coating layer.

20. A rechargeable battery comprising:
a positive electrode;
a negative electrode; and
the separator for a rechargeable battery of any one of claims 1 to 20 located between the positive electrode and the negative electrode.
